# EUROPÄISCHE PATENTSCHRIFT

(11) **EP 3 479 161 B1**
(45) Veröffentlichungstag und Bekanntmachung des Hinweises auf die Patenterteilung: **24.04.2024**
(21) Anmeldenummer: 17732114.8
(22) Anmeldetag: 22.06.2017
(51) Int. Cl.: G02B 27/09, G02F 1/35

(54) **VARIABEL-ASTIGMATISCHE STRAHLADAPTIONSVORRICHTUNG UND FREQUENZKONVERSIONSEINHEIT**
VARIABLE-ASTIGMATISM BEAM ADAPTATION DEVICE AND FREQUENCY CONVERSION UNIT
DISPOSITIF D'ADAPTATION DE FAISCEAU ASTIGMATE VARIABLE ET ENSEMBLE DE CONVERSION DE FRÉQUENCE

(30) Priorität: 29.06.2016 DE 102016111932
(43) Veröffentlichungstag der Anmeldung: 08.05.2019
(73) Patentinhaber: TRUMPF Laser GmbH, 78713 Schramberg (DE)
(72) Erfinder: ZAWISCHA, Ivo, 79194 Gundelfingen (DE); GRAF, Markus, 78112 St. Georgen (DE); WAGNER, Carolin, 78052 Villingen-Schwenningen (DE)
(74) Vertreter: Grättinger Möhring von Poschinger Patentanwälte Partnerschaft mbB
(86) Internationale Anmeldenummer: PCT/EP2017/065438
(87) Internationale Veröffentlichungsnummer: WO 2018/001868

(56) Entgegenhaltungen:
- EP-A2- 1 237 034
- US-A1- 2012 032 065

## Beschreibung

Die vorliegende Erfindung betrifft einen Strahladapter, insbesondere zum kontinuierlich variablen Anpassen eines Laserstrahls hinsichtlich Strahlparametern wie lateraler Ausdehnung und Divergenz, speziell zur Beeinflussung von Astigmatismus und nicht rotationssymmetrischen Strahlquerschnitten. Ferner betrifft die Erfindung eine Frequenzkonversionseinheit und ein Verfahren zur Frequenzkonversion.

In komplexen optischen Systemen können Laserstrahlen unterschiedliche Eingangsparameter aufweisen, die an enge Ausgangsspezifikationen anzupassen sind. Spezifische Eingangsparameter eines in ein optisches System einzukoppelnden Laserstrahls ergeben sich beispielsweise aus den Charakteristika der individuellen Strahlquellen bzw. der Strahlquellen in Kombination mit Strahlführungen oder weiteren im Strahl platzierten Optiken. Diese unterscheiden sich beispielsweise von Lasertyp zu Lasertyp, von Baureihe zu Baureihe, von Anlage (Installation) zu Anlage. Sie können sich aber, da komplexe optische System (wie Strahlquellen oder Strahlführungen) beispielsweise selten toleranzfrei identisch aufgebaut oder betrieben werden können, auch zwischen einzelnen als gleichartig geplanten Einheiten einer Baureihe, also z.B. aus nicht gänzlich identischen oder nicht perfekten Strahlquellen- bzw. Strahlführungsindividuen ergeben. Spezifische Ausgangsparameter können sich aufgrund spezieller optischer Anforderungen und zu bewirkendem optischen Prozess des den Laserstrahl aufnehmenden optischen Systems ergeben. Analog zu den Eingangsparametern können die erforderlichen Ausgangsparameter unterschiedlich sein und individuell variieren. Allerdings sind diese durch die Anwendung bzw. Folgeoptik häufig sehr eng toleriert, um exakt wiederholbare präzise Laseranwendungen /-prozesse zu ermöglichen.

Hierin wird von lateraler Strahlabmessung und Divergenz eines Strahls gesprochen. Es sind dabei im Wesentlichen die 2. Momente der Feld- bzw. Intensitätsverteilungen gemeint, wie sie in den Normen ISO 13694, ISO 11145 und ISO 11146 definiert sind. Es können jedoch auch andere geeignete Definitionen verwendet werden.

Häufig sind zwischen Strahlquelle, Strahlführung und Anwendungssystem insbesondere die laterale Ausdehnung eines Laserstrahls und seine Divergenz in mehreren Achsen unterschiedlich anzupassen. Für viele einen derartigen Strahl aufnehmende Systeme wird ein besonders rotationssymmetrischer Strahl benötigt, den die Strahlquellen oder die dem aufnehmenden System vorangehenden optischen Systeme mit der benötigten Genauigkeit nicht bereitstellen können. In einigen aufnehmenden Systemen ist jedoch auch eine genau definierte nicht rotationssymmetrische, z.B. elliptische und/oder astigmatische, Form des Laserstrahls Ziel der Anpassung. Allgemein zeigt US 2009/0257118 A1 eine Teleskopanordnung zur Strahlformung, die aufgrund der z.B. im Voraus gewählten Spiegel keine Variabilität hinsichtlich der Strahlanpassung aufweist.

Bei der Erzeugung von z.B. ultravioletter (UV) Laserstrahlung durch nichtlineare Frequenzkonversion kann es in einer Frequenzkonversionseinheit zu unerwünschten Aberrationen in der Amplitude und Phase der UV-Laserstrahlung kommen. Derartige Aberrationen werden z.B. durch nachgeschaltete und zur Korrektur ausgelegte optische Systeme kompensiert, siehe z.B. US 2012/0120481 A1 und US 2004/0228372 A1. Allerdings können Optikkomponenten derartiger optischer Korrektursysteme durch die UV-Laserstrahlung eine allmähliche, der Funktion des Gesamtsystems abträgliche Beeinflussung (z.B. eine lokale Zerstörung) der Oberfläche, insbesondere einer Oberflächenbeschichtung, erfahren.

Ferner offenbart DE 10 2010 003591 A1 eine Anordnung zur Frequenzkonversion, bei der zur Kompensation einer Differenz der Ausbreitungsrichtungen in einem nichtlinearen Kristall ein Strahlversatz zweier Eingangsstrahlen durch einen relativ kleinen, zur Strahlachse versetzten und/oder verkippten Linsendurchtritt bewirkt wird. Da nur ein geringer Strahlversatz benötigt wird, wird dabei eine zu starke Elliptizität der einfallenden Laserstrahlen vermieden. US 8,422,119 B1 offenbart ferner eine Kombination aus einem nichtlinearen Kristall zur Frequenzkonversion und einer Zylinderlinse, die vor dem nichtlinearen Kristall zur Erzeugung einer speziellen Strahlform im nichtlinearen Kristall angeordnet ist. Ferner offenbaren EP 1 237 034 B1 ein optisches System mit elektronischer Punktgrößensteuerung und Fokussierungskontrolle, US 2012/0032065 A1 eine dynamische Wellenfrontkontrolle eines frequenzkonvertierten Lasersystems und US 5,745,296 eine Mehrstrahl-Schreibvorrichtung.

Einem Aspekt dieser Offenbarung liegt die Aufgabe zugrunde, einen variablen astigmatischen Strahladapter bereitzustellen. Einem weiteren Aspekt dieser Offenbarung liegt die Aufgabe zugrunde, den Ausgangsstrahl einer Frequenzkonversionseinheit, insbesondere eines UV-Ausgangsstrahls, mit einer rotationssymmetrischen Ausdehnung und/oder Divergenz bereitzustellen.

Zumindest eine dieser Aufgaben wird gelöst durch eine Strahladaptionsvorrichtung nach Anspruch 1, eine Frequenzkonversionseinheit nach Anspruch 8, ein optisches System nach Anspruch 11 und durch ein Verfahren zur Frequenzkonversion nach Anspruch 12. Weiterbildungen sind in den Unteransprüchen angegeben.

In einem Aspekt umfasst eine Strahladaptionsvorrichtung zur variablen Astigmatismus-Einstellung und/oder Einstellung der lateralen Ausdehnung einer sich entlang einer Strahlachse der Strahladaptionsvorrichtung ausbreitenden elektromagnetischen Strahlung eine erste Astigmatismus-Linseneinheit zur Aufnahme der elektromagnetischen Strahlung, die mindestens eine bezüglich der Strahlachse zur Astigmatismus-Einstellung verkippbare erste Linse bereitstellt, eine Divergenzanpassungslinseneinheit mit einer zweiten Linse zur Einstellung der Divergenz, wobei der Abstand zwischen der zweiten Linse und der ersten Linse der ersten Astigmatismus-Linseneinheit entlang der Strahlachse einstellbar ist, und eine zweite Astigmatismus-Linseneinheit mit mindestens einer bezüglich der Strahlachse zur Astigmatismus-Einstellung verkippbaren dritten Linse. Dabei ist, insbesondere zur Einstellung der Größe der elektromagnetischen Strahlung auf der dritten Linse, der Abstand zwischen der zweiten Linse und der dritten Linse der zweiten Astigmatismus-Linseneinheit entlang der Strahlachse einstellbar.

In einem weiteren Aspekt weist eine Frequenzkonversionseinheit eine Strahlvorkompensationsvorrichtung mit einer wie zuvor beschriebenen Strahladaptionsvorrichtung zum Formen der von einer Strahlquelle bereitgestellten elektromagnetischen Strahlung in einen Ausgangsstrahl mit vorbestimmten Strahlparametern und eine Einrichtung zur Frequenzkonversion mit einem Frequenzkonversionskristall zur Erzeugung eines frequenzkonvertierten Strahls mit dem Ausgangsstrahl auf. Die Einrichtung zur Frequenzkonversion ist dazu ausgebildet, den frequenzkonvertierten Strahl mit einer bezüglich des Ausgangsstrahls asymmetrischen Strahlverformung hinsichtlich Strahlform und/oder Divergenz zu erzeugen.

In einem weiteren Aspekt weist ein optisches System eine Mehrzahl von Strahlform und/oder Divergenz im optischen System beeinflussenden optischen Komponenten und eine wie zuvor beschriebene Strahladaptionsvorrichtung zur Kompensation von Strahlform und/oder Divergenz im optischen System auf. Dabei wird die Kompensation insbesondere nach einem Einstellen und/oder Austauschen einer der optischen Komponenten und/oder zur Einstellung von bestimmten Parametern eines mit dem optischen System erzeugten Strahls vorgenommen.

In einem weiteren Aspekt weist ein Verfahren zur Frequenzkonversion die folgenden Schritte auf Bereitstellen einer sich entlang einer Propagationsrichtung ausbreitenden elektromagnetischen Strahlung, Anpassen der elektromagnetischen Strahlung mit einer wie zuvor beschriebenen Strahladaptionsvorrichtung hinsichtlich Strahlgröße und Divergenz zur Formung eines Ausgangsstrahls für eine Frequenzkonversion in einem Frequenzkonversionskristall und Erzeugen eines frequenzkonvertierten Strahls im Frequenzkonversionskristall. Die Anpassung hinsichtlich Strahlgröße und Divergenz des Ausgangsstrahls erfolgt derart, dass gewünschte Strahlparameter des frequenzkonvertierten Strahls vorliegen.

In einigen Ausführungsformen sind die erste Astigmatismus-Linseneinheit, die Divergenzanpassungslinseneinheit und/oder die zweite Astigmatismus-Linseneinheit derart ausgebildet, dass sich durch die Verkippbarkeit der ersten Linse und/oder der dritten Linse und die Verschiebbarkeit der Divergenzanpassungslinseneinheit durch Verkippen und Verschieben der entsprechenden Linsen die Größe der elektromagnetischen Strahlung an der zweiten Astigmatismus-Linseneinheit und die Divergenz der elektromagnetischen Strahlung in jeweils zwei unabhängigen Richtungen strahlabwärts der zweiten Astigmatismus-Linseneinheit einstellen lassen. Z.B. lassen sich die Richtungen (Hauptachsen) der Strahlausdehnung (an einer Referenzebene) unabhängig von den Richtungen (Hauptachsen) der Divergenz einstellen. Allgemein stehen die beiden Hauptachsen der Strahlausdehnung immer senkrecht aufeinander, genauso wie die beiden Hauptachsen der Divergenz.

In einigen Ausführungsformen sind die erste Astigmatismus-Linseneinheit, die Divergenzanpassungslinseneinheit und/oder die zweite Astigmatismus-Linseneinheit derart ausgebildet, dass die Verkipp- und Verschiebbarkeit der ersten Linse und/oder der dritten Linse und die Verschiebbarkeit der Divergenzanpassungslinseneinheit es ermöglichen, die Größe und die Divergenz der elektromagnetischen Strahlung strahlabwärts des Strahladapters in voneinander unabhängigen Richtungen nicht rotationssymmetrisch zur optischen Achse frei einzustellen, d.h. die Hauptachsen der Strahlausdehnung (an einer Referenzebene) und die Hauptachsen der Divergenz können in ihrer Ausrichtung und Größe voneinander unabhängig gewählt werden.

In einigen Ausführungsformen weist die Strahladaptionsvorrichtung ferner eine entlang der Strahlachse ausgebildete Justageschiene zur Positionierung der ersten Astigmatismus-Linseneinheit, der zweiten Astigmatismus-Linseneinheit und/oder der Divergenzanpassungslinseneinheit entlang der Strahlachse auf. Zusätzlich oder alternativ kann die Strahladaptionsvorrichtung ferner mindestens eine Drehhalterung zum Halten der ersten Linse oder der dritten Linse aufweisen, wobei die mindestens eine Drehhalterung mindestens eine Einstellvorrichtung zur Einstellung mindestens eines Kippwinkels der entsprechenden Linse um mindestens eine Kippachse aufweist. Insbesondere kann eine Kippachse orthogonal zur Strahlachse verlaufen.

In einigen Ausführungsformen weist die Strahladaptionsvorrichtung ferner eine Strahlanalyseeinheit auf, die eine erste Detektionseinheit zur Aufnahme eines Strahlprofils der elektromagnetischen Strahlung in einer Bildebene, und eine Analyselinse, die das Strahlprofil im Bereich der zweiten Astigmatismus-Linseneinheit, insbesondere der dritten Linse als Objektebene, auf die Bildebene abbildet. Ferner kann die Strahlanalyseeinheit mindestens eine Fernfelddetektionseinheit zur Aufnahme eines Strahlprofils der elektromagnetischen Strahlung in einer Fernfeldebene nach der zweiten Astigmatismus-Linseneinheit aufweisen. Die Strahlanalyseeinheit ist insbesondere zur Analyse eines Analyseanteils der elektromagnetischen Strahlung ausgebildet.

In einigen Ausführungsformen weist die Strahladaptionsvorrichtung ferner eine Steuerungseinheit zur Ansteuerung der Verkippung der ersten Linse und/oder der dritten Linse und/oder zur Ansteuerung mindestens eines der Abstände zwischen der Divergenzanpassungslinseneinheit und den Astigmatismus-Linseneinheiten auf. Die Ansteuerung kann insbesondere jeweils in Abhängigkeit von den mit der Strahlanalyseeinheit detektierten Strahlprofilen und insbesondere vorgegebenen Zielstrahlprofilen und/oder auf den Strahl zurückgehenden Messparametern erfolgen.

Ein Vorteil der hierein beschriebenen Konzepte ist die Einfachheit des optischen Aufbaus, mit dem die Aufgabenstellung einer Strahlparametereinstellung gelöst werden kann. So kann die Strahladaptionsvorrichtung vorteilhafterweise mit wenigen einfach herzustellenden sphärischen Linsen aufgebaut werden. Ein weiterer Vorteil liegt in der vergleichsweise großen Toleranz der Strahladaptionsvorrichtung gegen Dejustage und in der sehr flexiblen Einsetzbarkeit der Strahladaptionsvorrichtung. Da der Astigmatismus der gekippten Linsen langsam und kontinuierlich mit dem Kippwinkel zunimmt, kann ferner eine hohe Toleranz in den einzustellenden Winkeln vorliegen.

Die hierein beschriebenen Konzepte können somit einen wichtigen Beitrag dazu liefern, um die Divergenz und den Strahldurchmesser speziell bei freistrahlgeführten Ultrakurzpuls (UKP)-Lasern enger spezifizieren zu können. Die relative Unempfindlichkeit bei der Verwendung von sphärischen Linsen gegenüber Dejustage im Vergleich zur Verwendung von Zylinderlinsen kann ferner insbesondere die Inbetriebnahme der Strahladaptionsvorrichtung durch den Benutzer z.B. auch nach einem längeren Transport vereinfachen.

Die hierein beschriebenen Konzepte betreffen insbesondere die Strahlformung von Pump- und/oder Seed-Laserstrahlung für die Frequenzkonversion, insbesondere für die UV-Strahlungserzeugung, sowie allgemein die flexible Einstellung von Strahlparametern.

Hierin werden Konzepte offenbart, dies es erlauben, zumindest teilweise Aspekte aus dem Stand der Technik zu verbessern. Insbesondere ergeben sich weitere Merkmale und deren Zweckmäßigkeiten aus der folgenden Beschreibung von Ausführungsformen anhand der Figuren. Von den Figuren zeigen:
- Fig. 1A bis Fig. 1C: eine beispielhafte schematische Darstellung eines variablen Strahlaufweiters zur Divergenzeinstellung,
- Fig. 2: eine schematische perspektivische Ansicht eines Strahldurchtritts durch eine verkippte rotationssymmetrische Linse,
- Fig. 3: eine beispielhafte Ausführungsform einer variablen astigmatischen Strahladaptionsvorrichtung,
- Fig. 4: eine beispielhafte Ausführungsform einer Strahlanalyseeinheit zur Analyse eines Ausgangsstrahls einer variablen astigmatischen Strahladaptionsvorrichtung,
- Fig. 5: eine Skizze zur Verdeutlichung nicht-vorkompensierter Frequenzkonversionseffekte,
- Fig. 6: eine beispielhafte Ausführungsform einer Frequenzkonversionseinheit mit einer variablen astigmatischen Strahladaptionsvorrichtung zur Vorkompensation der Strahlform,
- Fig. 7: schematische beispielhafte horizontale und vertikale Schnittansichten einer Frequenzkonversionseinheit zur Verdeutlichung der Vorkompensation und
- Fig. 8: eine beispielhafte Skizze eines optischen Systems mit einer Strahladaptionsvorrichtung.

Hierin beschriebene Aspekte basieren zum Teil auf der Erkenntnis, dass ein System für eine variable Strahlaufweitung und Strahlparameteranpassung aus mehreren entlang der Strahlachse bewegbaren Linsen (z.B. Sammellinse, Streulinse, Sammellinse) um Kippfreiheitsgrade und evtl. transversale Translationsfreiheitsgrade hinsichtlich einer oder mehrerer Linsen ergänzt werden kann. Dadurch können sowohl Größe als auch Divergenz des Strahls am Ausgang des Systems in unterschiedlichen (transversal zur Propagationsrichtung verlaufenden) Achsen frei beeinflusst werden.

Wie eingangs erwähnt benötigen verschiedene Anwendungen von Lasersystemen beispielsweise in der Materialbearbeitung spezielle und teilweise eng tolerierte Strahlparameter. Diese können z.B. an einem speziellen optischen Element oder an einem zu bearbeitenden Werkstück bereitgestellt werden. Die Strahlparameter umfassen z.B. einen Fokusdurchmesser, eine Rundheit bzw. Elliptizität des Strahls im Fokus bzw. in der Nähe des Fokus sowie die axiale Lage des Fokus (in Propagationsrichtung der Laserstrahlung). Optische Elemente, die für spezielle Anwendungen entsprechende Strahlparameter erfordern können, umfassen z.B. DOEs und Frequenzkonversionskristalle. Auch der Transport des Laserlichtes zur Anwendung kann besondere Anforderungen an benötigte Eingangsstrahlparameter stellen (z.B. für Transportfasern oder Schneidoptiken von laserbasierten Werkzeugmaschinen).

Jedoch entspricht eine Laserstahlquelle bzw. eine propagierte Laserstrahlung selten direkt genau den benötigten Anforderungen. Darüber hinaus haben Strahlquellen, auch wenn sie von gleicher Bauart sind, häufig etwas voneinander abweichende Strahlparameter. Z.B. können verwendete optische Elemente vom Ideal abweichen oder thermische oder andere physikalische Effekte den Strahl unterschiedlich deformieren. Entsprechend kann eine Nachjustage in Abhängigkeit von der eingesetzten Strahlquelle beispielsweise beim Austausch einer Strahlquelle notwendig werden. Die Diskrepanzen zwischen von der Strahlquelle bereitgestellter elektromagnetischer Strahlung und der für die Anwendung benötigten Parameter bestehen z.B. in einer Abweichung des Strahldurchmessers (an einer Referenzstelle) und der Strahldivergenz. Diese Abweichungen können rotationssymmetrisch sein. Es können aber auch in verschiedenen Achsen verschiedene Größen benötigt oder angepasst werden, d.h. es kann ein spezieller unrunder oder allgemein astigmatischer Strahl vorliegen oder benötigt werden.

Es wird angemerkt, dass Anforderungen von Prozessen zur Laserbearbeitung an den Laserstrahl hinsichtlich der Strahlparameter häufig so eng sind, dass an die Komponenten des Lasersystems oder der Strahlführung extreme Anforderungen gestellt werden. Beispielsweise wird Astigmatismus leicht und häufig durch Planumlenker verursacht, die herstellungs- oder halterungsbedingt doch eine kleine (aber nicht immer identische) Krümmung aufweisen. Für eine präzise Lasermaterialbearbeitung ist ein astigmatischer Strahl meist nicht tolerierbar.

Die hierin offenbarte Strahladaptionsvorrichtung erlaubt es, den Strahl einer Strahlquelle an die Anforderung der Anwendung oder des Transports zur Anwendung anzupassen. Dabei können Streuungen der Strahlparameter ausgeglichen werden, indem Größe und Divergenz des einfallenden Strahls in verschiedenen Achsen unterschiedlich verändert werden. Mit der hierin offenbarten Strahladaptionsvorrichtung ist die Veränderung in allen Freiheitsgraden kontinuierlich variabel möglich und auch kleine Abweichungen können stufenlos angepasst werden.

Erweitert um eine Strahlanalyseeinheit kann die hierin offenbarte Strahladaptionsvorrichtung ferner eine Charakterisierung des Ausgangsstrahls bzw. eine gezielte Anpassung des Ausgangsstrahls an erforderliche Strahlparameter ermöglichen.

Allgemein kombiniert die hierin offenbarte Strahladaptionsvorrichtung das Prinzip eines variablen Strahlaufweiters (Teleskops) aus mehreren Linsen mit dem der verkippten Linse. Durch Wahl der Linsen und deren Abstände kann die allgemeine (rotationssymmetrische) Beeinflussung der Strahlgröße und Divergenz gewählt werden. Durch Verkippung einzelner oder mehrerer Elemente um mehrere Achsen oder eine frei gewählte Achse kann ferner die Symmetrie gezielt gebrochen und die Größe des Strahls in einer Referenzebene und die Divergenz in frei wählbaren Achsen unterschiedlich beeinflusst werden. Ein allgemein einstellbarer Astigmatismus kann somit erzeugt oder ein vorliegender Astigmatismus kann entsprechend kompensiert werden.

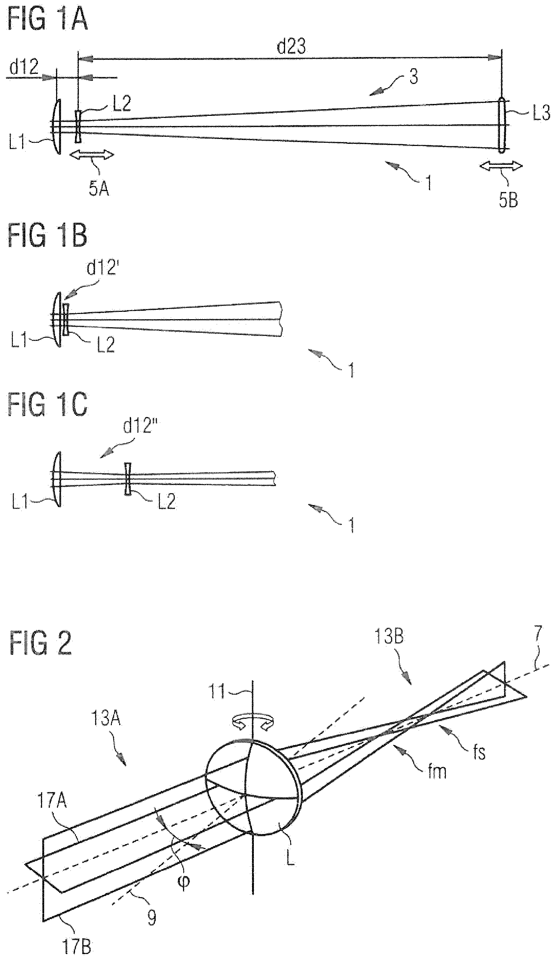

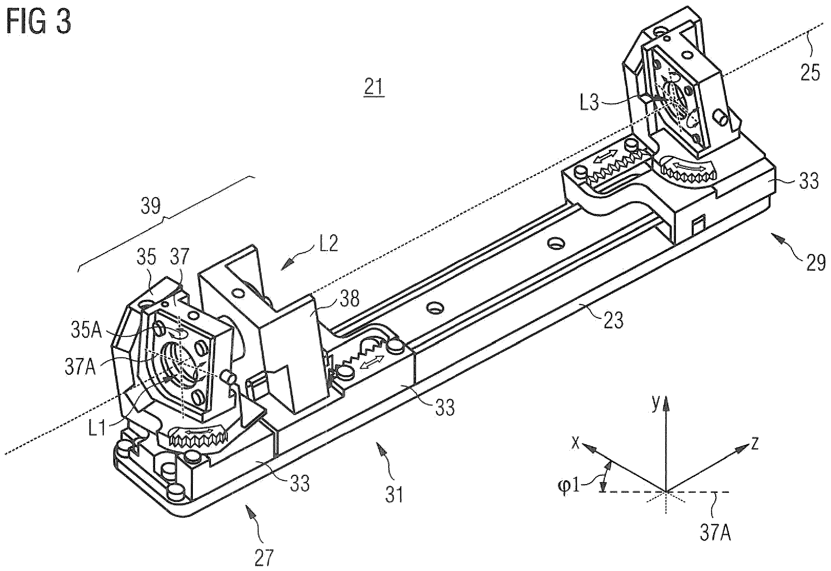

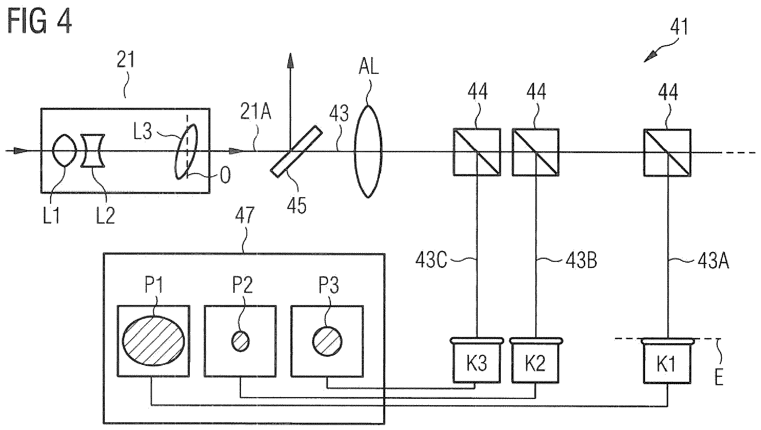

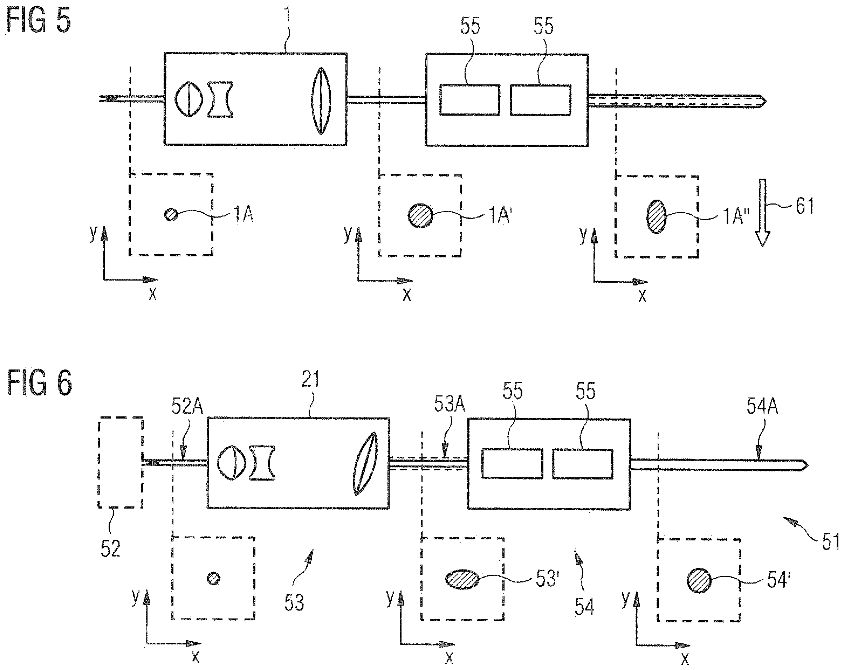

Nachfolgend werden die für die Strahladaptionsvorrichtung grundlegenden Effekte der Divergenzanpassung (in Verbindung mit den Figuren 1A bis 1C) und der Astigmatismuserzeugung durch Verkippung von Linsen (in Verbindung mit Fig. 2) erläutert. Anschließend wird in Verbindung mit den Figuren 3 und 4 eine beispielhafte Implementierung und eine beispielhafte Strahlanalyseeinheit beschrieben. In Verbindung mit den Figuren 5 und 6 wird abschließend die Anwendung einer Strahladaptionsvorrichtung im Rahmen einer Frequenzkonversion und deren Integration in ein UV-Laserstrahlung erzeugendes System beschrieben.

Fig. 1A zeigt einen klassischen variablen Strahlaufweiter 1 aus drei Linsen (oder Linseneinheiten): einer ersten Sammellinse L1, einer Streulinse L2 und einer zweiten Sammellinse L3. Der Strahlaufweiter 1 stellt einen beispielhaften Grundaufbau der hierin offenbarten Strahladaptionsvorrichtung dar. Die Funktion kann anschaulich wie folgt beschrieben werden. Die ersten beiden Linsen L1, L2 bilden in Abhängigkeit von ihren Brennweiten f1, f2 und ihrem Abstand d12 ein Element variabler Brennweite, mit welchem die Divergenz in einem Strahlabschnitt 3 hinter den beiden Linsen L1, L2 und vor der zweiten Sammellinse L3 verändert werden kann. Wie in Fig. 1A angedeutet ist, propagiert der Strahl zur im Abstand d23 von der zweiten Linse angeordneten dritten Linse L3 und ändert dabei seine Größe gemäß der eingestellten Divergenz.

Die Figuren 1B und 1C zeigen, dass ein kleinerer Abstand d12' die Divergenz verstärkt bzw. ein größerer Abstand d12" die Divergenz reduziert (zumindest solange der Abstand d12 kleiner ist als der Abstand zwischen der Sammellinse L1 und dem durch die Sammellinse L1 erzeugten Fokus). Dadurch ändert sich auch die Größe des Strahls an der Sammellinse L3 (z.B. der Strahldurchmesser basierend auf dem FWHM des Intensitätsprofils), wobei durch ein Verschieben der Sammellinse L3 (also eine Änderung des Abstands d23) die aktuelle Größe des Strahls an der Sammellinse L3 ebenfalls veränderbar ist.

Man erkennt, dass eine gewünschte (Soll-) Strahlgröße an der zweiten Sammellinse L3 dabei in einem weiten Bereich auf beliebig viele unterschiedliche Weisen erreicht werden kann, z.B. mit einer kleinen Divergenz und einem großen Abstand d23 (Propagationslänge) oder einer großen Divergenz und einem kleinen Abstand d23.

Die zweite Sammellinse L3 ändert nun noch einmal die Divergenz des Strahls. Dabei hängt ihr Einfluss auf die Divergenz von der Brennweite der zweiten Sammellinse L3 und der Größe des Strahls 3 an der zweiten Sammellinse L3 ab. Je größer der Strahl an der zweiten Sammellinse L3 und je kleiner die Brennweite f3 ist, desto größer ist die bewirkte Divergenzänderung. Die Größe des Strahls wird durch eine einzelne Linse (hier durch die zweite Sammellinse L3) nicht beeinflusst.

Da, wie oben ausgeführt, die (Soll-) Strahlgröße bei verschieden Divergenzen erreicht werden kann, ist es bei sinnvoller Wahl der Brennweite f3 möglich, den Strahl genau derart divergent auf die zweite Sammellinse L3 auftreffen zu lassen, dass durch die zweite Sammellinse L3 die gewünschte Ausgangsdivergenz als Ausgangsstrahlparameter erreicht wird. Für eine entsprechend kontinuierliche Einstellung der Ausgangsstrahlparameter sind in Fig. 1A beispielhaft die Einstellbarkeit des Abstandes d12 zwischen der ersten Sammellinse L1 und der Streulinse L2 durch einen die Verschiebbarkeit der Streulinse L2 anzeigenden Pfeil 5A und die Einstellbarkeit des Abstandes d23 der zweiten Sammellinse L3 zu Streulinse L2 durch einen die Verschiebbarkeit der Sammellinse L3 anzeigenden Pfeil 5B angedeutet.

Verwendet man im Strahlaufweiter 1 nur zentrierte rotationssymmetrische Linsen und setzt man einen entlang der gemeinsamen Symmetrieachse der rotationssymmetrischen Linsen verlaufenden Strahlengang voraus, findet eine rotationssymmetrische Strahlformung statt.

Die hierin offenbarte Strahladaptionsvorrichtung zur variablen Astigmatismus-Einstellung einer sich entlang einer Propagationsrichtung ausbreitenden elektromagnetischen Strahlung basiert auf einer Kombination eines derartigen Strahlaufweiters mit dem Aspekt der Astigmatismus-Erzeugung beim Strahldurchgang durch eine verkippte Linse. Es ergibt sich ein variabler Strahlaufweiter, der die Größe des Strahls und die Divergenz in unterschiedlichen transversalen Richtungen unabhängig voneinander ändern kann. Dabei müssen die Richtungen der Grö-ßenänderung und die der Divergenzänderung nicht miteinander übereinstimmen, d.h. es kann ein allgemeiner Astigmatismus erzeugt, kompensiert oder beliebig beeinflusst werden.

Fig. 2 verdeutlicht den Einfluss einer Verkippung einer rotationssymmetrischen Linse L bzgl. einer durch die Propagationsrichtung des Strahls vorgegebenen Strahlachse 7. Die Symmetrieachse 9 der Linse L, welche auch als optische Achse einer rotationssymmetrischen Linse bezeichnet wird, verläuft unter einem Winkel ϕ zur Strahlachse 7. In Fig. 2 erfolgt die Verkippung um eine Kippachse 11, die senkrecht zur und durch die Strahlachse 7 verläuft.

Für einen einfallenden Strahl 13A hängt die Brennweite der Linse L nun von der Orientierung der betrachteten Ebene ab, da die Krümmung der Linse nun nicht mehr rotationssymmetrisch zur Strahlachse 7 ist. In der Meridionalebene 17A, in der die Strahlachse 7 wie auch die Symmetrieachse 9 der Linse verlaufen und auf der die Kippachse 11 senkrecht steht, kommt es zu einer Verkürzung der Brennweite (Brennweite fm in Fig. 2) im Vergleich zur Brennweite in der Sagittalebene 17 B (Brennweite fs in Fig. 2), welche ebenfalls die Strahlachse 7 enthält aber zur Meridionalebene 17A senkrecht steht und welche damit auch die Kippachse 15 enthält. Es kommt zu einem Astigmatismus im auslaufenden Strahl 13B.

Im Unterschied zu (gerade im Strahl feststehenden) Zylinderoptiken oder anderen nicht rotationssymmetrischen, feststehenden Optiken kann die astigmatische Wirkung verkippbarer rotationssymmetrischer Optiken kontinuierlich eingestellt werden, beispielsweise ausgehend von einem Nullpunkt (keine Verkippung, identische Brennweiten in allen die Strahlachse 7 enthaltenden Ebenen, d.h. keine astigmatische Wirkung).

Mit zunehmendem Kippwinkel kann es neben dem Astigmatismus noch zu weiteren Abbildungsfehlern höherer Ordnung, wie Koma, kommen, jedoch können diese Effekte (insbesondere bei Optiken mit kleinen numerischen Aperturen) zumindest teilweise vernachlässigt werden.

Fig. 3 zeigt eine beispielhafte Ausführungsform einer Strahladaptionsvorrichtung 21, die auf dem klassischen variablen Strahlaufweiter 1 basiert. Auf einer Justageschiene 23 mit einem Schienenpaar, das sich entlang einer Strahlachse 25 der Strahladaptionsvorrichtung 21 (gegeben durch die bevorzugte Propagationsrichtung eines eingekoppelten Laserstrahls) erstreckt, sind eine erste Sammellinseneinheit 27, eine zweiten Sammellinseneinheit 29 und eine zwischen diesen angeordnete Streulinseneinheit 31 angeordnet. Mindestens zwei der drei Einheiten weisen einen in die Justageschiene 23 eingreifenden Schlitten 33 auf. Die Sammellinseneinheiten 27, 29 sind Beispiele für Astigmatismus-Linseneinheiten, die es erlauben, lokal eine wie in Fig. 2 erläuterte Astigmatismus-Einstellung vorzunehmen und damit im nachfolgenden optischen System einen Astigmatismus und eine nicht rotationssymmetrische laterale Ausdehnung eines Strahls zu beeinflussen. Ferner ist die Streulinseneinheit 31 ein Beispiel für eine Divergenzanpassungslinseneinheit, die es erlaubt, eine Divergenz-Einstellung vorzunehmen und damit die Divergenz lokal symmetrisch beieinflusst und damit im nachfolgenden optischen System im Wesentlichen nur Einfluss auf die mittlere laterale Ausdehnung und die mittlere Divergenz hat.

Die erste Sammellinseneinheit 27 ist an einem Ende der Justageschiene 23 angeordnet und weist mindestens eine erste Sammellinse L1 auf, die bzgl. einer sich zur Strahlachse 25 orthogonal erstreckenden Ebene verkippbar gehalten ist. D.h., eine optische Achse (nicht explizit eingezeichnet) der Sammellinse L1 kann bzgl. der Strahlachse 25 der Strahladaptionsvorrichtung 21 gekippt werden. Hierzu erkennt man in Fig. 3 eine erste Drehhalterung 35, die um eine erste Kippachse 35A, die senkrecht zu einer durch das Schienenpaar aufgespannten Ebene (hier die x-z-Ebene) steht, drehbar am Schlitten 33 bereitgestellt ist. Dabei verläuft die Kippachse 35A der Drehhalterung 35 insbesondere durch die Strahlachse 25 der Strahladaptionsvorrichtung 21 (solange keine Translation quer zur Strahlachse 25 vorgenommen wird).

Ferner erkennt man eine an der ersten Drehhalterung 35 angebrachte zweite Drehhalterung 37 zur Aufnahme der Sammellinse L1 und zum Positionieren derselben in der Strahlachse 25. Die zweite Drehhalterung 37 stellt eine zweite Kippachse 37A bereit, die senkrecht zur ersten Kippachse 35A und insbesondere durch die Strahlachse 25 der Strahladaptionsvorrichtung 21 verläuft (solange keine Translation quer zur Strahlachse 25 vorgenommen wird). Zur Verdeutlichung ist die Lage der zweiten Kippachse 37A aufgrund der vorgenommenen Verkippung um die erste Kippachse 35A um einen Winkel ϕ1 im Koordinatensystem angedeutet.

Überdies kann die erste Sammellinseneinheit 27 eine oder mehrere Translationseinheiten (nicht gezeigt) zur Verschiebung der Sammellinse L1 transversal zur Strahlachse 25 aufweisen, die damit zur Kompensation evtueller Ablenkungen der Strahlpropagationsrichtung weg von der Strahlachse 25 dienen. In der beispielhaften Ausführungsform der Fig. 3 ist der Schlitten 33 der ersten Sammellinseneinheit 27 z.B. ortsfest mit der Justageschiene 23 verschraubt.

Im Ergebnis erlauben es die erste Drehhalterung 35 und die zweite Drehhalterung 37, die Sammellinse L1 in einer beliebigen Richtung um einen einstellbaren Winkel ϕ verkippt zur Strahlachse 25 auszurichten.

Am anderen Ende der Justageschiene 23 ist die zweite Sammellinseneinheit 29 angeordnet, wobei die zweite Sammellinse L3 analog zur Ausführung der ersten Sammellinseneinheit 27 um zwei Achsen kippbar gehalten wird. Man erkennt ferner, dass die Lage der zweiten Sammellinseneinheit 29 über den zugehörigen Schlitten entlang des Schienenpaares, d.h. der Strahlachse 25, verschoben und lokal fixiert werden kann.

Die Streulinseneinheit 31 umfasst ebenfalls einen entlang des Schienenpaares verschiebbaren Schlitten 33, der eine Halterung 38 trägt, die die z.B. kurzbrennweitige Streulinse L2 symmetrisch zur Strahlachse 25 positioniert.

Die Sammellinse L1 der ersten Sammellinseneinheit 27 und die Streulinse L2 der Streulinseneinheit 31 wirken als optisches Eingangselement 39 der Strahladaptionsvorrichtung 21 und die Sammellinse L3 der zweiten Sammellinseneinheit 29 stellt das optische Ausgangselement der Strahladaptionsvorrichtung 21 dar.

Auch wenn die vorausgehend beschriebene Ausführungsform hinsichtlich einer Aufweitung des Strahls ausgelegt ist, erkennt der Fachmann, dass Ausführungsformen der hierin offenbarten Konzepte auch eine Reduktion einer Strahlabmessung oder einer Divergenz bewirken können sowie auch optische Systeme umfassen können, die eine oder mehrere Charakteristika des Strahls unverändert lassen.

Der Fachmann wird erkennen, dass auch andere Ausführungen von variablen Strahlaufweitern mit mehr als drei Linsen eine benötigte Strahlanpassung bereitstellen können. Dabei können alle Linsen oder ein Teil der Linsen (beispielsweise, wenn nicht die volle Justagefreiheit benötigt wird, nur eine einzige Linse) verkippbar gehalten werden.

Im Unterschied zu einem System zur festen Aufweitung basierend z.B. auf zwei Linsen kann ferner ein System mit drei oder mehr Linsen in der hierin offenbarten (oder in einer ähnlichen) Konfiguration einen bezüglich der Ausgangsstrahleigenschaften benötigten Toleranzbereich bereitstellen, um eine Bandbreite an aufzunehmenden Eingangsstrahleigenschaften abzudecken und die volle Freiheit bei der kontinuierlich variablen Anpassung bereitzustellen.

Nachfolgend wird die Wirkung der Strahladaptionsvorrichtung 21 anhand eines runden, anastigmatisch kollimierten Eingangsstrahls beschrieben, welchem beispielsweise eine Unrundheit und ein Astigmatismus aufgeprägt werden. Das Funktionsprinzip kann jedoch auch für unrunde, astigmatische (konvergente oder divergente) Eingangsstrahlen umgesetzt werden, bei welchen die Rundheit und der Astigmatismus verändert werden, beispielsweise die Divergenz auf ein dem Stahl entsprechendes Minimum reduziert wird, und der Strahl beispielsweise in einen runden anastigmatischen Strahl umgewandelt wird.

Die Form von in der Strahladaptionsvorrichtung 21 verwendeten Linsen kann sphärisch oder möglicherweise teilweise oder durchgehend asphärisch sein. Dabei können die Linsen einseitig plan oder beidseitig gekrümmt sein. Ferner sind gleichsinnige oder gegensinnige Oberflächenkrümmungen möglich, wobei die spezielle Form einer Linse den Effekt des gewünschten Astigmatismus und der unerwünschten Aberrationen höherer Ordnung bei Verkippung beeinflussen kann.

Bei einer vorliegenden Verkippung der Sammellinse L1 ist die Linsenkombination L1, L2 allgemein auf eine astigmatisch divergierende Wirkung eingestellt. Die mittlere Divergenz kann durch den Abstand der Linsen L1 und L2 zueinander frei eingestellt werden. Die astigmatische Differenz kann durch den effektiven, sich aus den beiden Kippwinkeln bezüglich der Kippachsen 35A, 37A ergebenden, Kippwinkel ϕ eingestellt werden. Die Ausrichtung der nun minimalen Divergenz in der Meridionalebene und der maximalen Divergenz in der Sagittalebene können durch den Azimuthwinkel der dem effektiven Kippwinkel zugeordneten Kippachse (in der x-y-Ebene) gewählt werden. Wird nur eine Verkippung vorgenommen, z.B. um die Kippachse 35A oder die Kippachse 37A, entspricht diese Kippachse der effektiven Kippachse und die Meridional- und Sagittalebenen werden durch diese Kippachse definiert. Die Verkippung kann beispielsweise auch mit entsprechenden Drehhalterungen erzeugt werden, mit welchen die Kippachse in der x-y-Ebene um die Strahlachse rotiert werden kann.

Zusammenfassend weitet sich bei einer vorliegenden Verkippung der Strahl nach der Linsenkombination L1, L2, d.h. dem optischen Eingangselement 39, entsprechend der eingestellten nicht rotationssymmetrischen Divergenz auf und bekommt ein elliptisches Profil.

Die Sammellinse L3 wird nun ebenfalls um eine effektive, in der x-y-Ebene liegende Kippachse um einen Winkel gekippt. Die laterale Ausdehnung des Strahls am Ort der Sammellinse L3 wird von der Sammellinse L3 nicht beeinflusst. Die astigmatische Wirkung der Sammellinse L3 beschreibt sich wie die der Sammellinse L1, jedoch mit eigenen Meridional- und Sagittalebenen. Die Kombination aus dem durch das optische Eingangselement 39 erzeugten Astigmatismus des Strahls mit dem durch die Sammellinse L3 erzeugten Astigmatismus erlaubt es, einen allgemeinen Astigmatismus des Ausgangsstrahls zu erzeugen, der in einem in weiten Bereichen frei parametrisierbar ist.

Beispielsweise kann die Sammellinse L3 so gekippt werden, dass die durch die Linsen L1 und L2 verursachte richtungsabhängig unterschiedliche Divergenz wieder kompensiert wird und ein Strahl mit nicht rotationssymmetrischer lateraler Ausdehnung und gleicher Divergenz in allen Richtungen oder z.B. mit richtungsabhängig minimal möglicher Divergenz erzeugt wird.

Da eine reale (dicke) Linse durch eine Verkippung immer auch einen Strahlversatz verursacht, kann, wie zuvor angesprochen, die Verkippbarkeit einer Linse durch eine Verschiebbarkeit der Linse senkrecht zur Strahlachse 25 des Systems ergänzt werden.

Selbstverständlich kann auf die Nutzung von Freiheitsgraden im System verzichtet werden, wenn nur eine teilweise Beeinflussung des Strahls angestrebt wird. Insbesondere ist die Kippung nur einer Linse deutlich einfacher zu justieren als die mehrerer Linsen.

In einer beispielhaften Ausführungsform sind die erste Sammellinse L1 und die zweite Sammellinse L3 jeweils eine Plankonvexlinse und die Streulinse ist eine Bikonkavlinse. Die Streulinse L2 hat, wie im Beispiel der Fig. 3, beispielsweise keine Freiheitsgrade zur Kippung. Die transversalen Lagen entlang der Strahlachse 25 (z-Positionen) der Streulinse L2 und der zweiten Sammellinse L3 können sich beispielsweise über eine Schwalbenschwanzführung fein einstellen lassen.

Neben der explizit erläuterten Ausführungsform mit je einer Sammellinse am Eingang und am Ausgang und einer dazwischen angeordneten Streulinse können die beiden ersten Linsen Streulinsen sein und nur die letzte Linse als Sammellinse ausgebildet werden. Ferner können je eine Streulinse am Eingang und am Ausgang und eine dazwischen angeordnete Sammellinse in der Strahladaptionsvorrichtung verwendet werden. Ferner können je eine Sammellinse am Eingang und am Ausgang und eine dazwischen angeordnete Streulinse in der Strahladaptionsvorrichtung verwendet werden.

Die Freiheitsgrade können sich allgemein bei Bedarf beispielsweise über Zahnstangen und Zahnradschlüssel, über Gewinde oder über Hebelwerkzeuge fein justieren lassen. Ferner können Freiheitsgrade nach der Justage in ihrer Lage individuell mit z.B. Fixierschrauben fixiert werden. Über Feingewindestifte einzustellende x-y-Translationen können z.B. alternativ über Gegenfedern präzise in Position gehalten werden.

In einigen Ausführungsformen kann beispielsweise eine Kippachse pro (Sammel-)Linse vorgesehen werden, wobei die Ausrichtung der Kippachse um die Strahlachse 25 (z-Achse) rotierbar ist. Im Unterschied zu den Sammellinseneinheiten 27, 29 in Fig. 3 weist hierfür eine Sammellinseneinheit anstelle der ersten Drehhalterung z.B. eine Rotationsvorrichtung auf, die die Orientierung der Kippachse der zweiten Drehhalterung in der x-y-Ebene um die Strahlachse 25 frei wählbar macht. Es lassen sich somit benötigte Orientierungen einstellen, wobei der Kippwinkel der zweiten Drehhalterung der effektive Kippwinkel ist und die Kippachse gleich der effektiven Kippachse ist. Ferner können in einigen Ausführungsformen Linsen in Tubussystemen positioniert werden, wobei eine z-Position beispielsweise über einen Gewinde- oder Schneckengangversteller einstellbar sein kann. Wichtig für die verschiedenen Ausführungsformen ist, dass man die Richtung der Symmetrieachse der zu verkippenden Linsen, d.h. die Richtung der optischen Achse 9 der Linse in Fig. 2, frei einstellen kann. Generell können zur Analyse des Strahls nach dem variabel astigmatischen Strahladapter verschiedenste Analyseverfahren eingesetzt werden, die Information zur Divergenz und Strahlgröße liefern. Bekannte Verfahren zur Strahldurchmesserbestimmung und Strahldivergenzbestimmung schließen insbesondere die in der ISO 11146 genannten Verfahren ein. Weiter ist auch der Einsatz von Wellenfrontsensoren wie z.B. eines Hartmann- oder Shack-Hartmann-Sensors möglich. Es können auch verschiede Verfahren miteinander kombiniert werden. Generell vorzuziehen sind Verfahren, die eine schnelle Charakterisierung der Strahleigenschaften an der Bezugsebene ermöglichen und so den Effekt der Justage des variablen astigmatischen Strahladapters unmittelbar in Echtzeit anzeigen.

Da jede weitere Optik in einem nachfolgenden optischen System sowohl die Größe als auch die Divergenz des Strahls beeinflussen kann, ist eine intuitive und einfache Justage des Systems in wenigen Schritten nicht immer möglich.

Die Strahlanalyse kann sich jedoch vereinfachend auf den Justageprozess auswirken, wenn sich die Bezugsebene der Analyse direkt auf der letzten Linse befindet. Wird der Strahl nämlich mit Bezug auf die Position auf der letzten Linse (beispielsweise der Sammellinse L3 der Strahladaptionsvorrichtung 21 der Fig. 3) charakterisiert, so hat diese letzte Linse keinen, bzw. nur einen sehr geringen Einfluss auf die Strahlgröße an ebendieser Bezugsebene, sondem nur bzw. vornehmlich einen Einfluss auf die Divergenz des Strahls. Die vorangehenden Justagefreiheitsgrade des Strahladapters, beispielsweise die der Linsenkombination 39, können näherungsweise genutzt werden, um die Ausgangsgröße des Strahls an der Bezugsebene einzustellen, ohne auf die Ausgangsdivergenz zu achten. Mit den Freiheitsgraden der letzten Linse kann dann die Ausgansdivergenz eingestellt werden, näherungsweise ohne die Größe zu beeinflussen. Soweit diese Aussagen nur näherungsweise gelten, kann ein schnell konvergierendes iteratives Verfahren zur Justage der Freiheitsgrade angewandt werden, welches anders als bei frei gewählten Bezugsebenen sicher und schnell konvergiert. Dies funktioniert auch dann, wenn sich die Bezugsebene nicht unmittelbar auf der letzten Linse, sondern in einem kleinen Abstand (im Vergleich zum Quotienten Strahldurchmesser und Divergenz) strahlabwärts befindet.

Ist der Strahl an einer bevorzugten Bezugsebene nicht direkt für die Charakterisierung zugänglich, so kann ein geeignetes abbildendes Verfahren verwendet werden, um die Ebene an einem gewünschten Ort abzubilden. Es ist allgemein möglich, den Strahl an anderer Stelle ausreichend zu charakterisieren und die Eigenschaften an der bevorzugten Bezugsebene zu berechnen.

Fig. 4 zeigt eine beispielhafte Ausführungsform einer Strahlanalyseeinheit 41 zur Charakterisierung eines Ausgangsstrahls 21A der Strahladaptionsvorrichtung 21, welche insbesondere zur Justage der Strahladaptionsvorrichtung verwendet werden kann.

Ein Teil 43 des Ausgangsstrahls 21A (beispielsweise Lecklicht durch einen als Abschwächer fungierenden Umlenkspiegel 45) wird für die Strahlanalyse genutzt und durch eine Analyselinse AL gelenkt. Nach der Analyselinse AL wird der Teil 43 des Strahls z.B. mit Strahlteilern 44 weiter in Teilstrahlen aufgeteilt.

Ein erster Teilstrahl 43A wird genutzt, um eine Abbildung eines Strahlprofils P1 am Ausgang der Strahladaptionsvorrichtung 21 (beispielsweise basierend auf einer Objektebene O, die an der Stelle der zweiten Sammellinse L3 gewählt wird) auf eine Bildebene E der Kamera K1 durch die Analyselinse AL zu erzeugen. Das Bild des Strahlprofils P1 auf der Kamera K1 ist nur von der Größe des Ausgangsstrahls 21A am Ausgang der Strahladaptionsvorrichtung 21 (z.B. an der zweiten Sammellinse L3) abhängig und nicht von der Divergenz. Die Wirkung der zweiten Sammellinse L3 auf die Divergenz wird so nicht detektiert. Damit können die ersten beiden Linsen L1, L2 der Strahladaptionsvorrichtung 21 genutzt werden, um die Strahlgröße beispielsweise mithilfe einer Darstellung des Strahlprofils P1 auf einem Strahlprofil-Monitor 47 einzustellen.

Ein weiterer Teilstrahl 43B wird genutzt, um ein Fernfeldbild des Ausgangsstrahls auf einer Kamera K2 zu erzeugen, d.h. die Kamera K2 befindet sich z.B. genau in der Brennebene der Analyselinse AL (aber nicht notwendigerweise im Fokus des Strahls). Das von der Kamera K2 aufgenommene Bild des Strahlprofils P2 ist nur von der Divergenz des Ausgangsstrahls 21A abhängig, nicht von der Größe des Ausgangsstrahls 21A an irgendeiner realen endlichen Position. Daher kann das Bild der Kamera K2 genutzt werden, um die Divergenz des Ausgangsstrahls 21A über die Position und/oder den Winkel der zweiten Sammellinse L3 einzustellen.

In einigen Parameterbereichen kann die zuvor beschriebene Methode nicht eindeutig sein, beispielsweise wenn der Ausgangsstrahl 21A vor der Analyselinse AL nicht kollimiert ist, denn allgemein kann der Ausgangsstrahl 21A nach der Strahladaptionsvorrichtung 21 konvergent oder divergent sein. In einigen Ausführungsformen der Analyseeinheit 41 kann ein weiterer Teilstrahl 43C mit einer weiteren Kamera K3 hinsichtlich einer geeigneten Position entlang der Propagationsrichtung vermessen werden, um eine eindeutige Charakterisierung des Strahls zu ermöglichen. Es können noch weitere Beobachtungspunkte im Strahl sinnvoll sein, um in der Praxis die Anfälligkeit des Verfahrens gegen Messfehler zu reduzieren. So können optional weitere Detektionseinheiten vor der Kamera K2, zwischen der Kamera K1 und der Kamera K2 oder hinter der Kamera K1 zur Aufnahme zusätzlicher Feldebenen vorgesehen werden.

In einigen Ausführungsformen der Analyseeinheit 41 können alle oder ein Teil der zu analysierenden Strahlpositionen oder Bilder auf einen einzigen Kamerachip projiziert werden und/oder auf dem Strahlprofil-Monitor 47 gemeinsam dargestellt werden und/oder mit einer entsprechenden computerbasierten Analyse ausgewertet werden. Ferner kann anstelle der Strahlteilung nach der Analyselinse AL bereits der (abgeschwächte) Ausgangsstrahl 21A geteilt werden, um diese Teile mit mehreren angepassten Linsen oder mit anderen Messmitteln zu analysieren.

Ferner kann beispielsweise ein Shack-Hartmann Sensor am Strahlausgang, z.B. hinter der letzten Linse L3 verwendet werden, um sowohl Profil als auch Divergenz des Ausgangsstrahls 21A an dieser Stelle zu ermitteln. Auch dabei kann eine Abbildung einer Bezugsebene auf den Sensor erfolgen, wobei hier der Einsatz eine Relay-Optik (z.B. ein f-2f-f-System), welche von sich aus keine Wellenfrontkrümmung einfügt, sinnvoll sein kann.

Mit Bezug zur Anwendung bei der Frequenzkonversion basieren die hierin beschriebene nAspekte des Weiteren zum Teil auf der Erkenntnis, dass, wenn einem Laserstrahl im z.B. infraroten Frequenzbereich der primären Strahlquelle vor der Frequenzkonversion (oder zwischen Frequenzkonversionsstufen im z.B. infraroten und sichtbaren Frequenzbereich) eine gegenläufige Phasen- und/oder Amplitudendeformation aufgeprägt wird, nach deren Überlagerung mit der im Frequenzkonverter hervorgerufenen Aberration ein verbessertes Strahlprofil des frequenzkonvertierten Strahls erzeugt werden kann.

Wie eingangs angesprochen kann es bei der Erzeugung von UV-Laserstrahlung durch nichtlineare Frequenzkonversion ausgehend von z.B. einem infraroten Laserstahl zu unerwünschten Aberrationen in der Amplitude und Phase der erzeugten UV-Laserstrahlung kommen. Derartige Aberrationen können beispielsweise durch den sogenannten Walk-off-Effekt, durch gegen den Strahl verkippte Facetten des nichtlinearen Kristalls bzw. der nichtlinearen Kristalle, allgemein durch Kristallfehler oder Oberflächenformfehler, wie sie beispielsweise durch die Anisotropie der Kristalle oder durch Herstellungsverfahren unerwünscht und nicht immer vollständig reproduzierbar erzeugt werden, oder durch andere, evtl. auch noch unbekannte Effekte oder durch diverse (prinzipielle oder fehlerhafte) Effekte in Hilfs- oder Folgeoptiken der Frequenzkonversion, wie z.B. in Optiken zur Trennung der Harmonischen, hervorgerufen werden.

Mit dem Ziel, derartige Aberrationen möglichst gering zu halten und dabei möglichst wenig bis keine (aufgrund der UV-Bestrahlung anfällige) Optiken zur nachträglichen Korrektur der Aberrationen vorsehen zu müssen, wird hierin vorgeschlagen, dem Laserstrahl vor der Frequenzkonversion eine geeignete, insbesondere einstellbare, räumliche Phasen- und Amplitudenanpassung aufzuprägen, die sich mit den Aberrationen im Konversionskristall und/oder von eventuellen unvermeidbaren Folgeoptiken so überlagert, dass sich am Ausgang des Gesamtsystems wieder (nahezu) die gewünschten Strahleigenschaften ergeben. Durch diese Vorkompensation kann so die Zahl der der UV-induzierten Zerstörung ausgesetzten Optiken klein gehalten werden.

Die hierein beschriebene Strahladaptionsvorrichtung kann dazu genutzt werden, einen oder mehrere Ausgangsstrahlen für die Frequenzkonversion bereitzustellen, die die aberrationshervorrufende Eigenschaft des Konversionskristalls beispielsweise bei der Erzeugung der dritten Harmonischen (THG) im UV kompensieren, oder auch bei der Erzeugung von UV-Strahlung durch die 2. oder 4. Harmonische (SHG, 4thHG), generell bei der Erzeugung höherer Harmonischer. Dabei bezieht sich die Vorkompensation mit der Strahladaptionsvorrichtung insbesondere auf eine nicht rotationssymmetrische Strahlform am Eintritt in den Konversionskristall, wie sie im Folgenden in Verbindung mit den Figuren 5 bis 7 erläutert wird.

Neben der explizit angesprochenen UV-Strahlungserzeugung kann auch vor einer SHG oder einer anderen Frequenzkonversion mit Zielwellenlängen unter z.B. 550 nm die Strahladaptionsvorrichtung eingesetzt werden, denn auch in diesem Wellenlängenbereich kann es vorteilhaft sein, möglichst wenige Optiken in hoher Leistung zu verwenden. Z.B. lassen sich viele optische Materialien und Beschichtungen bei in diesem Wellenlängenbereich nicht mehr in einem Hochleistungslaserstrahl einsetzen, da sie beginnen zu absorbieren und thermische Linsen aufzubauen. Weiterhin können sich z.B. gasförmige Umgebungsluftkontaminationen bereits durch Licht im Bereich von 550 nm und weniger auf Optiken ablagern. So ist es vorteilhaft, die Anzahl der Optiken aus dem Bereich des kurzwelligen Lichts hinter einer Frequenzkonversion zu reduzieren. Dies kann beispielsweise durch die Strahlanpassung in der Strahladaptionsvorrichtung vor der Frequenzkonversion ermöglicht werden.

Vorteile aus einer Vorkompensation von strahlabwärts aufgeprägten Aberrationen mit Hilfe der Strahladaptionsvorrichtung können sich auch für Laser mit größerer Wellenlänge, z.B. Infrarot (IR)-Laser, ergeben, wenn eine nachträgliche Kompensation oder Vermeidung der Aberration, z.B. aufgrund schlechter Zugänglichkeit, z.B. durch Verrohrung oder Kapselung an diesen Stellen, nicht oder nicht gut möglich ist.

In einem Konversionskristall kann beispielsweise der bereits erwähnte Walk-off-Effekt vorliegen, der dazu führt, dass eine der für den nichtlinearen Prozess benötigten Wellenlängen nicht genau in der gleichen Richtung propagiert wie die andere. Dadurch kann es zu einem unrunden frequenzkonvertierten Strahl kommen. Fig. 5 illustriert dies für den Aufbau einer Frequenzkonversionseinheit mit einem konventionellen Strahlaufweiter (siehe z.B. den Strahlaufweiter 1 aus Fig. 1), der einen Eingangslaserstrahl mit einem symmetrischen Strahlprofil 1A in ein entsprechend größeres symmetrisches Strahlprofil 1A' überführt. Durch die Frequenzkonversion wird in einer Anordnung von einem oder mehreren nichtlinearen Kristallen 55 z.B. UV-Strahlung in einem Bereich erzeugt, der in Richtung 61 beispielsweise durch den Walk-off verlängert ist und entsprechend ein nicht rotationssymmetrisches, unrundes Strahlprofil 1A" aufweist. Beispiele für Frequenzkonversionskristalle umfassen z.B. Beta-Bariumborat (beta-BaB₂O₄, BBO), Lithiumtriborat (LiB₃O₅, LBO), Cäsium-Lithiumborate (CsLiB₆O₁₀, CLBO), Kaliumdihydrogenphosphat (KH₂PO₄, KDP).

Bei der Verwendung einer Strahladaptionsvorrichtung 21 zur variablen Astigmatismus-Einstellung kann diese Unrundheit durch eine entsprechend gegenläufige Unrundheit im oder nahe am Kristall des der Frequenzkonversion zugrunde liegenden Strahls (z.B. des Ausgangsstrahls der Strahladaptionsvorrichtung) kompensiert werden.

Fig. 6 zeigt eine Frequenzkonversionseinheit 51 mit einer Strahlvorkompensationsvorrichtung 53 und einer Anordnung 54 von einem oder mehreren Konversionskristallen 55. Fig. 6 zeigt zusätzlich drei Strahlprofile, wie sie sich auf der Strahlachse ausbilden.

Die Frequenzkonversion geht von einer Strahlquelle 52 aus. Diese ist beispielsweise ein Yb:YAG-, Yb:Glass-, Nd:YAG-, Nd:YVO-, Nd:Glass- oder Nd:YLF-Laser oder ein anderer Festkörper oder Faserlaser mit z.B. den laseraktiven Ionen Ytterbium oder Neodym in einem Hostmaterial. Die Strahlquelle 52 kann ferner ein Festkörper- oder Faserlaser mit anderen laseraktiven Materialien oder anderen Hostmaterialien oder ein Diodenlaser oder ein Gaslaser sein. Allgemein kann die Strahlquelle 52 eine Laserstrahlquelle sein, die eine elektromagnetische Strahlung 52A, d.h. Laserstrahlung im Wellenlängenbereich von z.B. 500 nm bis z.B. 1600 nm, insbesondere von 800 nm bis 1100 nm, weiter insbesondere die Wellenlängen von 1030 nm, 1047 nm, 1051 nm, 1064 nm, 1070 nm, und/oder 1080 nm, emittiert und als Eingangsstrahlung für die Strahlvorkompensationsvorrichtung 53, insbesondere für deren Strahladaptionsvorrichtung 21 zur variablen Astigmatismus-Einstellung, bereitstellt. Fig. 6 zeigt wieder ein beispielhaftes symmetrisches Strahlprofil 1A dieser primären Strahlung.

Die Strahladaptionsvorrichtung 21 ist derart eingestellt, dass ein Ausgangsstrahl 53A der Strahlvorkompensationsvorrichtung 53 vorbestimmte Strahlparameter aufweist, die im oder nahe an einem der Frequenzkonversionskristalle 55 zu einer einseitig vergrößerten Strahlform führen. Ein entsprechend unrundes (z.B. elliptisches) Strahlprofil 53' ist in Fig. 6 beispielhaft am Ausgang der Strahladaptionsvorrichtung 21 angedeutet.

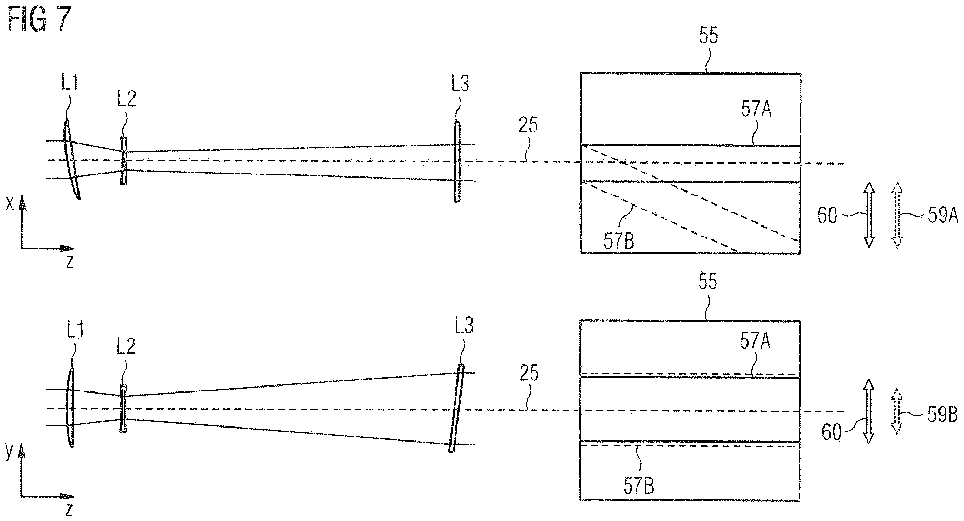

Fig. 7 verdeutlicht eine beispielhafte Einstellung der Strahladaptionsvorrichtung 21 in zwei orthogonalen Ebenen, der x-z-(horizontalen) Ebene und der y-z-(vertikalen) Ebene sowie eine beispielhafte Orientierung eines Konversionskristalls 55, die zu einem Walk-Off in der x-z-Ebene in "-x"-Richtung für die dem Walk-off unterliegende Wellenlänge führt.

In Fig. 7 ist der Strahlengang der unbeeinflussten Wellenlänge im Konversionskristall 55 mit einem durchgezogenen Linienpaar 57A und der Strahlengang der beeinflussten Wellenlänge mit einem gestrichelten Linienpaar 57B eingezeichnet. Letzterer läuft in der horizontalen Ebene unter einem Walk-off-Winkel zur Strahlachse 25. In der y-z-Richtung liegt kein Walk-off-Effekt vor und die Strahlengänge (gestrichelten-durchgezogenen Linienpaare 57A, 57B) verlaufen entsprechend in der y-z-Ebene parallel.

Ohne entsprechende Strahladaptionsvorrichtung kann dies, wie in Fig. 5 verdeutlicht, zu einer Verbreiterung der erzeugten UV-Strahlung in der horizontalen Ebene führen. Dies ist in Fig. 7 durch unterschiedlich lange, die Strahldurchmesser andeutende, gepunktete Pfeile 59A, 59B verdeutlicht (siehe hierzu auch die mit einer punktierten und einer durchgezogenen Linie verdeutlichte frequenzkonvertierte Strahlung in Fig. 5).

Wie in Fig. 7 ferner gezeigt wird, passt die Strahladaptionsvorrichtung 21 jedoch die Strahlparameter des Ausgangsstrahls 53A derart an, dass bei im Wesentlichen z.B. gleicher Divergenz der Ausgangsstrahl 53A in y-Richtung größer ist als in x-Richtung. Die Anpassung der Strahlgröße kann einen zumindest teilweisen Ausgleich der unterschiedlichen Strahldurchmesser in den beiden Richtungen der erzeugten UV-Strahlung 54A bewirken. Dies ist in Fig. 7 durch gleichlange, die Strahldurchmesser in den Ebenden andeutende, durchgezogene Pfeile 60 und in Fig. 6 durch ein rundes Strahlprofil 54' nach der Frequenzkonversionseinheit 51 verdeutlicht.

Mit anderen Worten legt das hierin vorgeschlagene Verfahren zur Frequenzkonversion den Ausgangsstrahl 53A mit einem variablen astigmatischen Strahladapter in horizontaler Richtung (d.h. in der Walk-off-Richtung) kleiner aus als in vertikaler Richtung, so dass der Walk-off-Effekt vorkompensiert wird. Man erhält dann nach der Konversion einen im Wesentlichen runden frequenzkonvertierten Strahl 54A.

Für die Vorkompensation kann, wie beispielhaft in Fig. 7 gezeigt wird, die erste Sammellinse L1 um die vertikale Achse und die zweite Sammellinse L3 um die horizontale Achse verkippt sein. Die Abstände der Linsen L1, L2 und L3 wurden ferner so anpasst, dass ein Ausgangsstrahl 53A mit der gewünschten Divergenz in den entsprechenden Ebenen geformt wird.

Walk-Off ist bei gegebener Kristallorientierung und Länge immer gleich, so dass man zu seiner Kompensation entsprechende, den Strahl nicht einstellbar formende, Festoptiken wählen könnte. Die Verwendung eines variablen astigmatischen Strahladapters hat aber den Vorteil, dass, wenn sich die tatsächliche Quelle und Stärke des Astigmatismus und der Unrundheit aufgrund der Überlagerung weiterer verschiedener Aberrationsursachen (siehe oben) oder - quellen (inklusive einer eventuell nicht vorhersagbar astigmatischen unrunden Quelle 52 A) nicht exakt voraussagen lässt, im jeweiligen Frequenzkonversionsmechanismus eine Feinjustage der Vorkompensation durchgeführt werden kann.

Beispielsweise können sich Imperfektionen der Konversionskristalle oder der nachfolgenden Optiken auf die benötigte Vorkompensation auswirken. So kann beispielsweise die optische Oberfläche der Kristalle durch die Politur einen leichten Zylinder aufweisen oder es liegt eine sich auswirkende Anisotropie des Kristalls/der Kristalle vor. Gerade aufgrund der Vielzahl von Parametern (bekannt und unbekannt) ist hier der Einsatz einer Strahladaptionsvorrichtung zur variablen Strahlformung besonders nützlich, da so die Strahlparameter leicht von Lasersystem zu Lasersystem auf die speziellen Verhältnisse anpassbar sind.

Dies wäre insbesondere mit einer Zylinderlinse oder einer einzelnen verkippten Linse nicht möglich. Selbst zwei verkippte Linsen können eine noch zu geringe Flexibilität bieten, da dann zwar der Unterschied der beiden Achsen variabel einstellbar sein kann, jedoch die mittlere Vergrößerung des Strahls nicht. Überdies ändert sich die mittlere Vergrößerung im Vergleich zum Aufbau mit gerade in den Strahl gestellten Linsen.

Neben der beispielhaft in Fig. 6 gezeigten Anordnung einer Strahlvorkompensationsvorrichtung vor der Anordnung von Konversionskristallen kann ergänzend oder alternativ eine weitere Strahlvorkompensationsvorrichtung vor einem oder vor mehreren speziellen oder vor jedem einzelnen Konversionskristall bereitgestellt werden.

Das ausgeführte Beispiel des Einsatzes einer Strahladaptionsvorrichtung bei der Frequenzkonversion zeigt, dass Strahladaptionsvorrichtungen allgemein in optischen Systemen immer dann eingesetzt werden können, wenn aus unterschiedlichsten Gründen (z.B. Austausch von Komponenten mit nicht identischen Eigenschaften, schlechte Zugangsmöglichkeiten z.B. aufgrund von geschlossenen/verrohrten Systemen, Betriebsparameter-abhängige Beeinflussung von Strahlparametern etc.) eine hohe Flexibilität hinsichtlich einer kontinuierlich variablen Anpassung des Laserstrahls benötigt wird.

Die hierin offenbarte Strahladaptionsvorrichtung erlaubt es mit einfachen Mitteln, für eine Vielzahl von Eingangsparametern den jeweils gewünschten Ausgangsparameter eines Laserstrahls bereitzustellen. Entsprechend können optische Einflüsse verschiedenster Komponenten in optischen Systemen flexibel mit den hierin offenbarten Strahladaptionsvorrichtungen kompensiert werden.

D.h., dass das Konzept der Vorkompensation allgemein auch auf nicht UV-Systeme übertragen werden kann, wenn z.B. die nachträgliche Korrektur aus anderen Gründen (z.B. Zugänglichkeit) nicht oder nur schwer möglich ist.

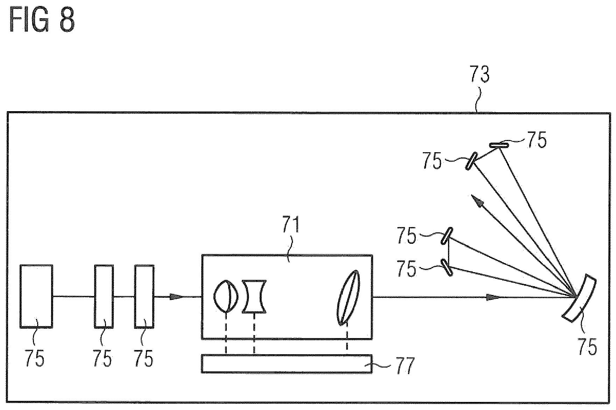

Fig. 8 zeigt allgemein eine Strahladaptionsvorrichtung 71, die in einem optischen System 73 z.B. zur Kompensation von Unterschieden von austauschbaren optischen Komponenten 75 (Laserquellen, Linsen, Spiegel, Lasermedien, Pumpquellen) bzw. zur Einstellung von bestimmten anwendungsspezifischen Ausgangstrahlparametern verwendet wird. Beispielsweise erlaubt eine Steuerungseinheit 77 die Einstellung von Abstandsparametern und/oder Winkelparametern bzgl. der Linsen der Strahladaptionsvorrichtung 71.

Mit Blick auf die allgemeine Einsetzbarkeit der Strahladaptionsvorrichtung erstreckt sich der Wellenlängenbereich auch auf bzgl. der oben angegebenen beispielhaften Wellenlängen kürzere und längere Wellenlängen. So können beispielsweise ZnSe-Linsen auch für CO2-Laser eine Ausführung der Strahladaptionsvorrichtung im entsprechenden Wellenlängenbereich des CO2-Lasers ermöglichen.

Beispielsweise kann die Strahladaptionsvorrichtung bei Bearbeitungsoptiken für Strahlwerkezeuge eingesetzt werden, die reproduzierbar einen runden Spot definierter Größe in definierter Lage nach der Bearbeitungsoptik erzeugen sollen. Derartige Bearbeitungsoptiken benötigen einen anastigmatischen und runden Eingangsstrahl definierter Größe und Divergenz, der mit der Strahladaptionsvorrichtung bereitgestellt werden kann. Ferner können z.B. diffraktive optische Elemente (DOE) von Eingangsstrahlen mit reproduzierbar einstellbaren, genau definierten und engtolerierten Strahlparametern profitieren.

Es wird explizit betont, dass alle in der Beschreibung und/oder den Ansprüchen offenbarten Merkmale als getrennt und unabhängig voneinander zum Zweck der ursprünglichen Offenbarung ebenso wie zum Zweck des Einschränkens der beanspruchten Erfindung unabhängig von den Merkmalskombinationen in den Ausführungsformen und/oder den Ansprüchen angesehen werden sollen. Es wird explizit festgehalten, dass alle Bereichsangaben oder Angaben von Gruppen von Einheiten jeden möglichen Zwischenwert oder Untergruppe von Einheiten zum Zweck der ursprünglichen Offenbarung ebenso wie zum Zweck des Einschränkens der beanspruchten Erfindung offenbaren, insbesondere auch als Grenze einer Bereichsangabe.

## Patentansprüche

1. Strahladaptionsvorrichtung (21) zum kontinuierlich variablen Anpassen einer sich entlang einer Strahlachse (25) der Strahladaptionsvorrichtung (21) ausbreitenden elektromagnetischen Strahlung hinsichtlich Strahlparametern wie lateraler Ausdehnung und Divergenz, insbesondere zur Beeinflussung von Astigmatismus und nicht rotationssymmetrischen Strahlquerschnitten, mit
einem optischen Eingangselement (39) mit
einer ersten Astigmatismus-Linseneinheit (27) zur Aufnahme der elektromagnetischen Strahlung, die mindestens eine bezüglich der Strahlachse (25) zur Astigmatismus-Einstellung verkippbare erste Linse (L1) bereitstellt, wobei die erste Linse (L1) in einer beliebigen Richtung um einen einstellbaren Winkel verkippbar ausgerichtet werden kann, und
einer entlang der Strahlachse (25) strahlabwärts der ersten Astigmatismus-Linseneinheit (27) angeordneten Divergenzanpassungslinseneinheit (31) mit einer zweiten Linse (L2) zur lokal symmetrisch beeinflussenden Einstellung der Divergenz, wobei die zweiten Linse (L2) symmetrisch zur Strahlachse (25) positioniert ist und der Abstand (d12) zwischen der zweiten Linse (L2) und der ersten Linse (L1) der ersten Astigmatismus-Linseneinheit (27) entlang der Strahlachse (25) einstellbar ist, und
einem optischen Ausgangselement mit
einer entlang der Strahlachse (25) strahlabwärts der Divergenzanpassungslinseneinheit (31) angeordneten zweiten Astigmatismus-Linseneinheit (29) mit mindestens einer bezüglich der Strahlachse (25) zur Astigmatismus-Einstellung verkippbaren dritten Linse (L3), wobei die dritte Linse (L3) in einer beliebigen Richtung um einen einstellbaren Winkel verkippbar ausgerichtet werden kann und der Abstand (d23) zwischen der zweiten Linse (L2) der Divergenzanpassungslinseneinheit (31) und der dritten Linse (L3) entlang der Strahlachse (25) einstellbar ist.

2. Strahladaptionsvorrichtung (21) nach Anspruch 1, wobei
die erste Linse (L1) und/oder die dritte Linse (L3) eine Sammellinse ist und/oder die zweite Linse (L2) eine Streulinse ist, oder
wobei die erste Linse (L1) und/oder die dritte Linse (L3) eine Streulinse ist und/oder die zweite Linse (L2) eine Sammellinse ist, oder
wobei die erste Linse (L1) und/oder die zweite Linse (L2) eine Streulinse ist und/oder die dritte Linse (L3) eine Sammellinse ist.

3. Strahladaptionsvorrichtung (21) nach einem der vorhergehenden Ansprüche, wobei
die erste Linse (L1), die zweite Linse (L2) und/oder die dritte Linse (L3) rotationssymmetrische Linsen sind und/oder
wobei die erste Linse (L1) und/oder die dritte Linse (L3) mindestens in einer Richtung orthogonal zur Strahlachse (25) verschiebbar sind.

4. Strahladaptionsvorrichtung (21) nach einem der vorhergehenden Ansprüche, wobei die erste Astigmatismus-Linseneinheit (27), die Divergenzanpassungslinseneinheit (31) und/oder die zweite Astigmatismus-Linseneinheit (29) derart ausgebildet sind, dass sich durch die Verkippbarkeit der ersten Linse (L1) und/oder der dritten Linse (L3) und durch die Verschiebbarkeit der zweiten Linse (L2) und/oder der dritten Linse (L3) durch Verkippen und Verschieben der entsprechenden Linsen die Größe der elektromagnetischen Strahlung an einer Bezugsebene nach der Strahladaptionsvorrichtung (21) und die Divergenz der elektromagnetischen Strahlung in jeweils zwei unabhängigen Richtungen einstellen lassen.

5. Strahladaptionsvorrichtung (21) nach einem der vorhergehenden Ansprüche, ferner mit
einer entlang der Strahlachse (25) ausgebildeten Justageschiene (23) zur Positionierung der ersten Astigmatismus-Linseneinheit (27), der zweiten Astigmatismus-Linseneinheit (29) und/oder der Divergenzanpassungslinseneinheit (31) entlang der Strahlachse (25) und/oder
mit mindestens einer Drehhalterung (35, 37) zum Halten der ersten Linse (L1) oder der dritten Linse (L3), wobei die mindestens eine Drehhalterung (35, 37) mindestens eine Einstellvorrichtung zur Einstellung mindestens eines Kippwinkels (ϕ, ϕ1) der Linse (L1, L3) um mindestens eine Kippachse (35A, 37A) aufweist, und optional eine Kippachse (35A, 37A) orthogonal zur Strahlachse (25) verläuft.

6. Strahladaptionsvorrichtung (21) nach einem der vorhergehenden Ansprüche, ferner mit
einer Strahlanalyseeinheit (41) umfassend
eine erste Detektionseinheit (K1) zur Aufnahme eines Strahlprofils (P1) der elektromagnetischen Strahlung in einer Bildebene (E),
eine Analyselinse (AL), die das Strahlprofil (P1) im Bereich der zweiten Astigmatismus-Linseneinheit (29), insbesondere der dritten Linse (L3) als Objektebene (O), auf die Bildebene (E) abbildet, und
mindestens eine Fernfelddetektionseinheit (K2) zur Aufnahme eines Strahlprofils (P2) der elektromagnetischen Strahlung im Fernfeld nach der zweiten Astigmatismus-Linseneinheit (29),
wobei optional die Strahlanalyseeinheit (41) zur Analyse eines Analyseanteils (43) der elektromagnetischen Strahlung ausgebildet ist.

7. Strahladaptionsvorrichtung (21) nach einem der vorhergehenden Ansprüche, ferner mit
einer Steuerungseinheit (77) zur Ansteuerung der Verkippung der ersten Linse (L1) und/oder der dritten Linse (L3) und/oder zur Ansteuerung mindestens eines der Abstände (d12, d23) zwischen den Linsen (L1, L2, L3), optional jeweils in Abhängigkeit von den mit der Strahlanalyseeinheit (41) detektierten Strahlprofilen (P1, P2, P3, ...), vorgegebenen Zielstrahlprofilen und/oder auf den Strahl zurückgehenden Messparametern.

8. Frequenzkonversionseinheit (51) mit
einer Strahlvorkompensationsvorrichtung (53) mit einer Strahladaptionsvorrichtung (21) nach einem der Ansprüche 1 bis 7 zum Formen der von einer Strahlquelle (52) bereitgestellten elektromagnetischen Strahlung (52A) in einen Ausgangsstrahl (53A) mit vorbestimmten Strahlparametern und
einer Einrichtung zur Frequenzkonversion mit mindestens einem Frequenzkonversionskristall (55) zur Erzeugung eines frequenzkonvertierten Strahls (54A) mit dem Ausgangsstrahl (53A), wobei die Einrichtung zur Frequenzkonversion derart ausgebildet ist, dass der frequenzkonvertierte Strahl (54A) bezüglich Strahlform und/oder Divergenz des Ausgangsstrahls (53A) nicht rotationssymmetrisch verformt erzeugt wird.

9. Frequenzkonversionseinheit (51) nach Anspruch 8, wobei
die Einrichtung zur Frequenzkonversion dazu ausgebildet ist, den frequenzkonvertierten Strahl (54A) durch einen eine nicht rotationssymmetrische Strahlform bewirkenden Frequenzkonversionsmechanismus zu erzeugen, und/oder
die vorbestimmten Strahlparameter hinsichtlich einer nicht rotationssymmetrischen Verformung des Strahls und optional zur Ausbildung einer asymmetrischen Strahlform (53') des Ausgangsstrahls (53A) im Frequenzkonversionskristall (55) vorbestimmt sind und/oder
die Einrichtung zur Frequenzkonversion die Asymmetrie im frequenzkonvertierten Strahl (54) hinsichtlich Strahlform und/oder Divergenz zumindest teilweise kompensiert und/oder
die Einrichtung zur Frequenzkonversion einen Frequenzkonversionsmechanismus umfasst, der für entsprechend vorbestimmte Strahlparameter des Ausgangsstrahls (53A) einen hinsichtlich Strahlform und/oder Divergenz im Wesentlichen rotationssymmetrischen, frequenzkonvertierten Strahl (54) erzeugt.

10. Frequenzkonversionseinheit (51) nach Anspruch 8 oder 9, wobei
der Frequenzkonversionskristall (55) durch eine bei der Frequenzkonversion vorliegende Walk-off-Richtung (61) bezüglich der Propagationsrichtung des Ausgangsstrahls (53A) charakterisiert ist,
der Frequenzkonversionsmechanismus zu einer in Walk-off-Richtung (61) vergrößerten Strahlform des frequenzkonvertierten Strahls (54A) führt und
die Strahlvorkompensationsvorrichtung (53) derartige vorbestimmte Strahlparameter des Ausgangsstrahls (53A) bereitstellt, dass die Strahlform des Ausgangsstrahls (53A) im oder nahe am Frequenzkonversionskristall senkrecht zur Walk-off-Richtung und zur Propagationsrichtung größer ist als in der Walk-off-Richtung.

11. Optisches System (73) mit
einer Mehrzahl von Strahlform und/oder Divergenz im optischen System (73) beeinflussenden optischen Komponenten (75) und
einer Strahladaptionsvorrichtung (71) nach einem der Ansprüche 1 bis 7 zur Kompensation von Strahlform und/oder Divergenz im optischen System (73), insbesondere nach einem Einstellen und/oder Austauschen einer der optischen Komponenten (75) und/oder zur Einstellung von bestimmten Parametern eines mit dem optischen System (73) erzeugten Strahls, und optional ferner mit
einer Steuerungseinheit (77) zur Einstellung eines Abstandsparameters und/oder eines Winkelparameters bzgl. Linsen (L1, L2, L3) der Strahladaptionsvorrichtung (71).

12. Verfahren zur Frequenzkonversion mit den Schritten
Bereitstellen einer sich entlang einer Propagationsrichtung ausbreitenden elektromagnetischen Strahlung (52A),
Anpassen der elektromagnetischen Strahlung (52A) mit einer Strahladaptionsvorrichtung (21) nach einem der Ansprüche 1 bis 7 hinsichtlich Strahlgröße und Divergenz zur Formung eines Ausgangsstrahls (53A) für eine Frequenzkonversion in mindestens einem Frequenzkonversionskristall (55) und
Erzeugen eines frequenzkonvertierten Strahls (54A) im Frequenzkonversionskristall (55),
wobei die Anpassung hinsichtlich Strahlgröße und Divergenz des Ausgangsstrahls (53A) zu gewünschten Strahlparametern des frequenzkonvertierten Strahls (54A) führt.

13. Verfahren nach Anspruch 12, wobei die Anpassung zu einer im Wesentlichen Rotationssymmetrie des frequenzkonvertierten Strahls (54A) führt.

14. Verfahren nach Anspruch 12 oder 13, wobei
die elektromagnetische Strahlung (52A) Laserstrahlung im Wellenlängenbereich von ca. 500 nm bis ca. 1600 nm, optional im Wellenlängenbereich von ca. 800 nm bis ca. 1100 nm, ist und
der frequenzkonvertierte Strahl (54A) im Wellenlängenbereich von ca. 250 nm bis ca. 600 nm liegt, und optional harmonische Strahlung zweiter, dritter oder höherer Ordnung der elektromagnetischen Strahlung (52A) ist.

15. Verfahren nach einem der Ansprüche 12 bis 14,
wobei die Frequenzkonversion durch eine bei der Frequenzkonversion vorliegende Walk-off-Richtung (61) bezüglich der Propagationsrichtung des Ausgangsstrahls (53A) charakterisiert ist und
die Anpassung des Ausgangsstrahls bewirkt, dass die Strahlform des Ausgangsstrahls (53A) im oder nahe am Frequenzkonversionskristall senkrecht zur Walk-off-Richtung und zur Propagationsrichtung größer ist als in der Walk-off-Richtung.

## Claims

1. A beam adaptation device (21) for continuously variable adaptation of electromagnetic radiation propagating along a beam axis (25) of the beam adaptation device (21) with respect to beam parameters such as lateral extent and divergence, in particular for influencing astigmatism and non-rotationally symmetrical beam cross-sections, comprising:
an optical input element (39) with
a first astigmatism lens unit (27) for receiving the electromagnetic radiation, which provides at least one first lens (L1), which is tiltable with respect to the beam axis (25) for adjustment of astigmatism, wherein the first lens (L1) can be oriented by tiling in any direction by an adjustable angle, and
a divergence matching lens unit (31) positioned along the beam axis (25) downstream of the first astigmatism lens unit (27) having a second lens (L2) for adjusting the divergence local symmetrically, wherein the second lens (L2) is positioned symmetrically to the beam axis (25) and the distance (d12) between the second lens (L2) and the first lens (L1) of the first astigmatism lens unit (27) being adjustable along the beam axis (25); and
an optical output element with
a second astigmatism lens unit (29) positioned along the beam axis (25) downstream of the divergence matching lens unit (31) and having at least one third lens (L3), which is tiltable relative to the beam axis (25) for adjustment of astigmatism, wherein the third lens (L3) can be oriented by tilting in any direction by an adjustable angle and the distance (d23) between the second lens (L2) of the divergence matching lens unit (31) and the third lens (L3) is adjustable along the beam axis (25).

2. The beam adaptation device (21) of claim 1, wherein
the first lens (L1) and/or the third lens (L3) is a converging lens; and/or the second lens (L2) is a diverging lens or
wherein the first lens (L1) and/or the third lens (L3) is a diverging lens and/or the second lens (L2) is a converging lens or
wherein the first lens (L1) and/or the second lens (L2) is a diverging lens and/or the third lens (L3) is a converging lens.

3. The beam adaptation device (21) of any one of the preceding claims,
wherein
the first lens (L1), the second lens (L2) and/or the third lens (L3) are rotationally symmetrical lenses; and/or
wherein the first lens (L1) and/or the third lens (L3) are displaceable in at least one direction orthogonal to the beam axis (25).

4. The beam adaptation device (21) of any one of the preceding claims,
wherein the first astigmatism lens unit (27), the divergence matching lens unit (31), and/or the second astigmatism lens unit (29) are configured such that by the tiltability of the first lens (L1) and/or the third lens (L3) and by the displaceability of the second lens (L2) and/or the third lens (L3) by tilting and displacing of the corresponding lenses, the magnitude of the electromagnetic radiation at a reference plane after the beam adaptation device (21) and the divergence of the electromagnetic radiation in respectively two independent directions are adjustable.

5. The beam adaptation device (21) of any one of the preceding claims, further comprising:
an adjustment rail (23) formed along the beam axis (25), the adjustment rail configured for positioning the first astigmatism lens unit (27), the second astigmatism lens unit (29), and/or the divergence matching lens unit (31) along the beam axis (25); and/or
at least one rotation holder (35, 37) configured for holding the first lens (L1) or the third lens (L3), wherein the at least one rotation holder (35, 37) has at least one adjusting device for adjusting at least one tilt angle (ϕ, ϕ1) of the lens (L1, L3) about at least one tilt axis (35A, 37A), and optionally a tilt axis (35A, 37A) extending orthogonally to the beam axis (25).

6. The beam adaptation device (21) of any one of the preceding claims, further comprising:
a beam analysis unit (41) having
a first detection unit (K1) for recording a beam profile (P1) of the electromagnetic radiation in an image plane (E),
an analysis lens (AL), which maps the beam profile (P1) in a region of the second astigmatism lens unit (29), in particular the third lens (L3) as an object plane (O), onto the image plane (E), and
at least one far field detection unit (K2) for recording a beam profile (P2) of the electromagnetic radiation in the far field after the second astigmatism lens unit (29),
wherein optionally the beam analysis unit (41) is configured for analysing an analysis portion (43) of the electromagnetic radiation.

7. The beam adaptation device (21) of any one of the preceding claims, further comprising:
a control unit (77) for controlling the tilt of the first lens (L1) and/or the third lens (L3) and/or for controlling at least one of the distances (d12, d23) between the lenses (L1, L2, L3), optionally in each case as a function of the beam profiles (P1, P2, P3, ...), which are detected by the beam analysis unit (41), predetermined target beam profiles and/or measurement parameters derived from the beam.

8. A frequency conversion unit (51) comprising:
a beam pre-compensation device (53) having a beam adaptation device (21) according to any one of claims 1 to 7 for shaping the electromagnetic radiation (52A) provided by a beam source (52) into an output beam (53A) having predetermined beam parameters; and
a frequency conversion device having at least one frequency conversion crystal (55) for generating a frequency-converted beam (54A) with the output beam (53A), the frequency conversion device being configured such that the frequency-converted beam (54A) is not generated in a rotationally symmetrically deformed manner with respect to beam shape and/or divergence of the output beam (53A).

9. The frequency conversion unit (51) of claim 8, wherein
the frequency conversion device is adapted to generate the frequency-converted beam (54A) by a frequency conversion mechanism creating a non-rotationally symmetrical beam shape; and/or
the predetermined beam parameters are predetermined with respect to a non-rotationally symmetrical deformation of the beam and optionally for forming an asymmetric beam shape (53') of the output beam (53A) in the frequency conversion crystal (55); and/or
the frequency conversion device at least partially compensates for the asymmetry in the frequency-converted beam (54) with respect to beam shape and/or divergence; and/or
the frequency conversion device comprises a frequency conversion mechanism which, for correspondingly predetermined beam parameters of the output beam (53A), generates a substantially rotationally symmetrical, frequency-converted beam (54) with respect to beam shape and/or divergence.

10. The frequency conversion unit (51) of claim 8 or 9, wherein
the frequency conversion crystal (55) is **characterized by** a walk-off direction (61) given for the frequency conversion with respect to the propagation direction of the output beam (53A),
the frequency conversion mechanism results in an enlarged beam shape of the frequency-converted beam (54A) in the walk-off direction (61), and
the beam pre-compensation device (53) provides such predetermined beam parameters of the output beam (53A) that the beam shape of the output beam (53A) in or near the frequency conversion crystal perpendicular to the walk-off direction and to the propagation direction is larger than in the walk-off direction.

11. An optical system (73) comprising:
a plurality of optical components (75) influencing beam shape and/or divergence in the optical system (73); and
a beam adaptation device (71) according to any one of claims 1 to 7 for compensating beam shape and/or divergence in the optical system (73), in particular after adjusting and/or exchanging one of the optical components (75) and/or for adjusting specific parameters of a beam generated with the optical system (73), and optionally further comprising:
a control unit (77) for adjusting a distance parameter and/or an angle parameter with respect to lenses (L1, L2, L3) of the beam adaptation device (71).

12. A frequency conversion method comprising the steps:
providing electromagnetic radiation (52A) propagating along a propagation direction;
adapting the electromagnetic radiation (52A) with a beam adaptation device (21) according to any one of claims 1 to 7 with respect to beam size and divergence to form an output beam (53A) for a frequency conversion in at least one frequency conversion crystal (55); and
generating a frequency-converted beam (54A) in the frequency-conversion crystal (55),
wherein the adjustment with respect to beam size and divergence of the output beam (53A) results in desired beam parameters of the frequency-converted beam (54A).

13. The method of claim 12, wherein the adjustment results in substantially rotational symmetry of the frequency-converted beam (54A).

14. The method of claim 12 or 13, wherein
the electromagnetic radiation (52A) is laser radiation in the wavelength range from about 500 nm to about 1600 nm, optionally in the wavelength range from about 800 nm to about 1100 nm; and
the frequency-converted beam (54A) is in the wavelength range from about 250 nm to about 600 nm, and the frequency-converted beam (54A) optionally is harmonic radiation of second, third, or higher order of the electromagnetic radiation (52A).

15. The method of any one of claims 12to 14,
wherein the frequency conversion is **characterized by** a walk-off direction (61) given for the frequency conversion with respect to the propagation direction of the output beam (53A); and
the adjustment of the output beam causes the beam shape of the output beam (53A) in or near the frequency conversion crystal perpendicular to the walk-off direction and to the propagation direction to be larger than in the walk-off direction.

## Revendications

1. Dispositif d'adaptation de faisceau (21) pour l'adaptation variable en continu d'un rayonnement électromagnétique s'élargissant le long d'un axe de faisceau (25) du dispositif d'adaptation de faisceau (21) eu égard à des paramètres de faisceau comme l'extension latérale et la divergence, en particulier pour influencer l'astigmatisme et les sections transversales de faisceau non symétriques en rotation, avec :
un élément d'entrée optique (39) avec
une première unité de lentille astigmate (27) pour recevoir le rayonnement électromagnétique, qui fournit au moins une première lentille (L1) basculable en ce qui concerne l'axe de faisceau (25) pour le réglage astigmate, sachant que la première lentille (L1) peut être orientée basculable dans n'importe quelle direction dans un angle réglable, et
une unité de lentille d'adaptation de divergence (31) disposée le long de l'axe de faisceau (25) en aval de la première unité de lentille astigmate (27) avec une deuxième lentille (L2) pour le réglage d'influence localement symétrique de la divergence, sachant que la deuxième lentille (L2) est positionnée symétriquement à l'axe de faisceau (25) et la distance (d12) entre la deuxième lentille (L2) et la première lentille (L1) de la première unité de lentille astigmate (27) peut être réglée le long de l'axe de faisceau (25), et
un élément de sortie optique avec
une deuxième unité de lentille astigmate (29) disposée le long de l'axe de faisceau (25) en aval de l'unité de lentille d'adaptation de divergence (31) avec au moins une troisième lentille (L3) basculable en ce qui concerne l'axe de faisceau (25) pour le réglage astigmate, sachant que la troisième lentille (L3) peut être orientée basculable dans n'importe quelle direction dans un angle réglable et la distance (d23) peut être réglée le long de l'axe de faisceau (25) entre la deuxième lentille (L2) de l'unité d'adaptation de divergence (31) et la troisième lentille (L3).

2. Dispositif d'adaptation de faisceau (21) selon la revendication 1, sachant que
la première lentille (L1) et/ou la troisième lentille (L3) est une lentille convergente et/ou la deuxième lentille (L2) est une lentille divergente, ou
sachant que la première lentille (L1) et/ou la troisième lentille (L3) est une lentille divergente et/ou la deuxième lentille (L2) est une lentille convergente, ou sachant que la première lentille (L1) et/ou la deuxième lentille (L2) est une lentille divergente et/ou la troisième lentille (L3) est une lentille convergente.

3. Dispositif d'adaptation de faisceau (21) selon l'une quelconque des revendications précédentes, sachant que la première lentille (L1), la deuxième lentille (L2) et/ou la troisième lentille (L3) sont des lentilles symétriques en rotation et/ou,
sachant que la première lentille (L1) et/ou la troisième lentille (L3) peuvent être déplacées au moins dans une direction de façon orthogonale à l'axe de faisceau (25).

4. Dispositif d'adaptation de faisceau (21) selon l'une quelconque des revendications précédentes, sachant que la première unité de lentille astigmate (27), l'unité d'adaptation de divergence (31) et/ou la deuxième unité de lentille astigmate (29) sont constituées de telle manière que la taille du rayonnement électromagnétique sur un plan de référence après le dispositif d'adaptation de faisceau (21) et la divergence du rayonnement électromagnétique peuvent être réglées dans respectivement deux directions indépendantes par la capacité de basculement de la première lentille (L1) et/ou de la troisième lentille (L3) et par la capacité de déplacement de la deuxième lentille (L2) et/ou de la troisième lentille (L3) par basculement et déplacement des lentilles correspondantes.

5. Dispositif d'adaptation de faisceau (21) selon l'une quelconque des revendications précédentes, avec en plus un rail d'ajustage (23) constitué le long de l'axe de faisceau (25) pour le positionnement de la première unité de lentille astigmate (27), de la deuxième unité de lentille astigmate (29) et/ou de l'unité de lentille d'adaptation de divergence (31) le long de l'axe de faisceau (25) et/ou
avec au moins une fixation rotative (35, 37) pour maintenir la première lentille (L1) ou la troisième lentille (L3), sachant qu'au moins une fixation rotative (35, 37) comporte au moins un dispositif de réglage pour régler au moins un angle de basculement (ϕ,ϕ1) de la lentille (L1, L3) autour d'au moins un axe de basculement (35A, 37A) et un axe de basculement (35A, 37A) passe en option de façon orthogonale à l'axe de faisceau (25).

6. Dispositif d'adaptation de faisceau (21) selon l'une quelconque des revendications précédentes, avec en plus une unité d'analyse de faisceau (41) comprenant
une première unité de détection (K1) pour enregistrer un profil de faisceau (P1) du rayonnement électromagnétique dans un plan d'image (E),
une lentille d'analyse (AL), qui reproduit le profil de faisceau (P1) dans la zone de la deuxième unité de lentille astigmate (29), en particulier de la troisième lentille (L3) en tant que plan d'objet (O), sur le plan d'image (E), et
au moins une unité de détection en champ distant (K2) pour enregistrer un profil de faisceau (P2) du rayonnement électromagnétique en champ distant après la deuxième unité de lentille astigmate (29),
sachant qu'en option, l'unité d'analyse de faisceau (41) est constituée pour l'analyse d'une partie d'analyse (43) du rayonnement électromagnétique .

7. Dispositif d'adaptation de faisceau (21) selon l'une quelconque des revendications précédentes, avec en plus une unité de commande (77) pour le basculement angulaire de la première lentille (L1) et/ou de la troisième lentille (L3) et/ou pour la commande d'au moins une des distances (d12, d23) entre les lentilles (L1, L2, L3), en option respectivement en fonction des profils de faisceau (P1, P2, P3, ...) détectés avec l'unité d'analyse de faisceau (41), des profils de faisceau ciblés prédéfinis et/ou de paramètres de mesure revenant au faisceau.

8. Unité de conversion de fréquence (51) avec
un dispositif de précompensation de faisceau (53) avec un dispositif d'adaptation de faisceau (21) selon l'une quelconque des revendications 1 à 7 pour former le rayonnement (52A) électromagnétique préparé par une source de rayonnement (52) dans un faisceau initial (53A) avec des paramètres de faisceau prédéterminés, et un dispositif de conversion de fréquence avec au moins un cristal de conversion de fréquence (55) pour produire un faisceau converti en fréquence (54A) avec le faisceau initial (53A), sachant que le dispositif de conversion de fréquence est constitué de telle manière que le faisceau converti en fréquence (54A) est produit déformé non symétriquement en rotation concernant la forme de faisceau et/ou la divergence du faisceau initial (53A).

9. Unité de conversion de fréquence (51) selon la revendication 8, sachant que
le dispositif de conversion de fréquence est constitué pour produire le faisceau converti en fréquence (54A) par un mécanisme de conversion de fréquence causant une forme de faisceau non symétrique en rotation, et/ou
les paramètres de faisceau prédéterminés sont prédéterminés en ce qui concerne une déformation non symétrique en rotation du faisceau et en option pour constituer une forme de faisceau asymétrique (53') du faisceau initial (53A) dans le cristal de conversion de fréquence (55),
et/ou
le dispositif de conversion de fréquence compense au moins en partie l'asymétrie dans le faisceau converti en fréquence (54) en ce qui concerne la forme de faisceau et/ou la divergence
et/ou
le dispositif de conversion de fréquence comprend un mécanisme de conversion de fréquence, qui produit un faisceau (54) converti en fréquence, pour l'essentiel symétrique en rotation, en ce qui concerne la forme de faisceau et/ou la divergence pour les paramètres de faisceau du faisceau initial (53A) prédéterminés de façon correspondante.

10. Unité de conversion de fréquence (51) selon la revendication 8 ou 9, sachant que
le cristal de conversion de fréquence (55) est **caractérisé par** une direction de décalage spatial (walk-off) (61) présente lors de la conversion de fréquence concernant la direction de propagation du faisceau initial (53A),
le mécanisme de conversion de fréquence conduit à une forme de faisceau du faisceau converti en fréquence (54A), agrandie en direction de décalage spatial (61), le dispositif de précompensation de fréquence (53) fournit des paramètres de faisceau prédéterminés du faisceau initial (53A) tels que la forme de faisceau du faisceau initial (53A) dans ou proche du cristal de conversion de fréquence est plus grande perpendiculairement à la direction de décalage spatial et à la direction de propagation que dans la direction de décalage spatial.

11. Système optique (73) avec
une pluralité de composants optiques (75) influençant la forme de faisceau et/ou la divergence dans le système optique (73), et
un dispositif d'adaptation de faisceau (71) selon l'une quelconque des revendications 1 à 7 pour la compensation de la forme de faisceau et/ou de la divergence dans le système optique (73), en particulier après réglage et/ou échange d'un des composants optiques (75) et/ou pour le réglage de certains paramètres d'un faisceau produit avec le système optique (73) et en option en plus avec
une unité de commande (77) pour le réglage d'un paramètre de distance et/ou d'un paramètre angulaire concernant des lentilles (L1, L2, L3) du dispositif d'adaptation de faisceau (71).

12. Procédé de conversion de fréquence avec les étapes de préparation d'un rayonnement électromagnétique s'élargissant le long d'une direction de propagation (52A),
adaptation du rayonnement électromagnétique (52A) avec un dispositif d'adaptation de faisceau (21) selon l'une quelconque des revendications 1 à 7 concernant la taille de faisceau et la divergence pour former un faisceau initial (53A) pour une conversion de fréquence dans au moins un cristal de conversion de fréquence (55), et production d'un faisceau converti en fréquence (54A) dans le cristal de conversion de fréquence (55),
sachant que l'adaptation concernant la taille de faisceau et la divergence du faisceau initial (53A) conduit aux paramètres de faisceau souhaités du faisceau converti en fréquence (54A).

13. Procédé selon la revendication 12, sachant que l'adaptation conduit à pour l'essentiel une symétrie de rotation du faisceau converti en fréquence (54A).

14. Procédé selon la revendication 12 ou 13, sachant que le rayonnement électromagnétique (52A) est un rayonnement laser dans une gamme de longueurs d'ondes d'env. 500 nm à env. 1600 nm, en option dans une gamme de longueurs d'ondes d'env. 800 nm à env. 1100 nm, et le faisceau converti en fréquence (54A) se situe dans une gamme de longueurs d'ondes d'env. 250 nm à env. 600 nm et est en option un rayonnement harmonique de deuxième, de troisième ordre ou d'ordre supérieur du rayonnement électromagnétique (52A).

15. Procédé selon l'une quelconque des revendications 12 à 14,
sachant que la conversion de fréquence est **caractérisée par** une direction de décalage spatial (walk-off) (61) relative à la direction de propagation du faisceau initial (53A), et
l'adaptation du faisceau initial fait que la forme du faisceau du faisceau initial (53A) dans ou proche du cristal de conversion de fréquence est plus grande perpendiculairement à la direction de décalage spatial et à la direction de propagation que dans la direction de décalage spatial.
